# EUROPEAN PATENT SPECIFICATION

(11) **EP 4 293 866 B1**
(45) Date of publication and mention of the grant of the patent: **07.10.2026**
(21) Application number: 23179908.1
(22) Date of filing: 16.06.2023
(51) Int. Cl.: H02J 7/00, B60L 5/36, B60L 53/16, B64F 1/36

(54) **APPARATUS AND METHODS FOR PROVIDING CHARGING POWER TO AN EXTERNAL DEVICE**
VORRICHTUNGEN UND VERFAHREN ZUM BEREITSTELLEN VON LADELEISTUNG FÜR EIN EXTERNES GERÄT
APPAREIL ET PROCÉDÉS POUR FOURNIR UNE ALIMENTATION DE CHARGE À UN DISPOSITIF EXTERNE

(30) Priority: 16.06.2022 TW 111122501; 15.06.2023 US 202318335718
(43) Date of publication of application: 20.12.2023
(73) Proprietor: GEOSAT Aerospace & Technology Inc., 701 Tainan City (TW)
(72) Inventor: TSAI, Chiu-Teng, 701 Tainan City (TW)
(74) Representative: Viering, Jentschura & Partner mbB Patent- und Rechtsanwälte

(56) References cited:
- EP-A1- 3 738 891
- US-A1- 2015 097 530
- US-A1- 2020 227 870

## Description

### CROSS-REFERENCE TO RELATED APPLICATION

The present application claims priority to Taiwan Patent Application No. 111122501, filed on June 16, 2022.

### TECHNICAL FIELD

The present application relates to providing charging power to an external device, and more particularly, to apparatus and methods for providing charging power to an external device.

### BACKGROUND

When a device needs to be charged, a user usually needs to align the device's charging connector with a charger's connector before electrically connecting the device to the charger. The alignment may require additional attention and time from the user. It may cause inconvenience and inefficiency to the user. If a device to be charged is an unmanned device, the unmanned device and/or a charger may require an additional mechanism for aligning their connectors. The additional mechanism may cause additional power consumption and/or cost increase and require additional operation time.

EP 3 738 891 A1 discloses a landing platform for unmanned aerial vehicles. The platform comprises supporting legs fastened to the platform, and a control unit and provides an electrical charging system including a plurality of coplanar adjacent electroconductive plates, with adjacent edges electrically insulated, arranged on an electrically insulated support. Each electroconductive plate is connected by an electroconductive cable to the control unit and to a power source, wherein the electroconductive plate, electroconductive cable and control unit form an electrical circuit and the control unit is configured to detect a change of an electric potential of the electrical circuit due to a UAV, landing on said platform and providing at least two points of contact with two different electroconductive plates. The platform supply energy, from power source to said two different electroconductive plates using corresponding electroconductive cables in order to charge powering means of said UAV.

US 2015/097530 A1 discloses recharging an aircraft battery. An aircraft recharging station is provided for recharging an aircraft provided with a rechargeable battery. The recharging station includes a parking surface with conductive tiles selectively connected to an electrical power supply. The recharging station also includes a controller configured to determine a position of the aircraft on the parking surface by connecting, including being configured to iteratively connect a different pair of tiles to the electrical power supply to provide a circuit including positive and negative tiles connected thereto, and test an electrical circuit condition of the circuit, until a closed circuit condition is determined, thereby indicating that the aircraft is positioned on the positive and negative tiles, and that the battery is thereby rechargeable by the electrical power supply.

US 2020/227870 A1 discloses coupling interface and method of operation. A charging surface comprising multiple conductive regions can be used to charge an electronic device placed on it the surface so that electrodes on the device engage respective conductive regions of the surface. In order to distinguish such chargeable devices from short circuits and other spurious connections, the devices are required to demonstrate an anti-inversion characteristic, for example implemented with a MOSFET, across at least a pair of these electrodes. The surface can then be controlled so as to establish a text voltage across each pair of conductive regions in sequence, and look for pairs of conductive regions behaving as being coupled by such an anti inverter circuit. Relationships between every pair of conductive regions can be determined and recording, and the voltage level supplied to each conductive region set accordingly. The coupling interface may furthermore operate to identify device classes, and to set supply voltages or establish additional connections on the basis of stored device class information.

### SUMMARY

Embodiments of the present application provide apparatus and methods for providing charging power to an external device.

These embodiments include apparatus for providing charging power to a pair of external power charging terminals that are coupled to a power storage device of an external device. The pair of external power charging terminals are spaced apart by a predetermined distance. The apparatus includes a conductive plate assembly. The conductive plate assembly includes a plurality of conductive plates. Each of the conductive plates has a surface. The surface has a maximum surface length that is less than the predetermined distance. The maximum surface length is greater than or equal to a length between any two points on the surface of the conductive plate. The apparatus also includes a plurality of detector circuits respectively coupled to corresponding ones of the plurality of conductive plates. Each of the detector circuits is configured to be responsive to a voltage on one of the external power charging terminals to provide a detection signal when the corresponding conductive plate contacts the one of the external power charging terminals. The apparatus also includes a plurality of selection circuits respectively coupled to corresponding ones of the plurality of conductive plates and including a pair of power-supply terminals for receiving a power supply voltage. Each of the selection circuits is further coupled to receive the detection signal from a corresponding one of the detector circuits and configured to electrically connect the corresponding conductive plate to one of the power-supply terminals in response to receiving the detection signal; wherein the plurality of detector circuits are coupled to an electrically common circuit point ; wherein each of the detector circuits comprises first diodes and second diodes coupled in parallel and a resistor, wherein: a positive terminal of the first diode and a negative terminal of the second diode are coupled to the corresponding conductive plate; a negative terminal of the first diode and a positive terminal of the second diode are coupled to the resistor; and the resistor is coupled to the electrically common circuit point. Some examples of such an apparatus are defined in claims 2 to 5.

These embodiments further include a method for providing charging power, using the apparatus of any of claims 1 to 5, to a pair of power charging terminals that are coupled to a power storage device. The method includes detecting, by a first detector circuit of the plurality of detector circuits, that a first of a plurality of conductive plates is contacted by a first of the power charging terminals based on a first current. The method also includes detecting, by a second detector circuit of the plurality of detector circuits, that a second of the plurality of conductive plates is contacted by a second of the power charging terminals based on a second current. The second current is sourced from the first current, or the first current is sourced from the second current. The method further includes electrically connecting the first conductive plate to a first of a pair of power-supply terminals by a first selection circuit of the plurality of selection circuits. The method also includes electrically connecting the second conductive plate to a second of the pair of power-supply terminals by a second selection circuit of the plurality of selection circuits. The method further includes providing charging power to the pair of power charging terminals from the pair of power-supply terminals through first and second selection circuits via the first and second conductive plates; wherein the plurality of detector circuits are coupled to an electrically common circuit point; wherein each of the detector circuits comprises first diodes and second diodes coupled in parallel and a resistor, wherein: a positive terminal of the first diode and a negative terminal of the second diode are coupled to the corresponding conductive plate; a negative terminal of the first diode and a positive terminal of the second diode are coupled to the resistor; and the resistor is coupled to the electrically common circuit point. Some examples of such a method are defined in claims 7 to 11.

### BRIEF DESCRIPTION OF THE DRAWINGS

FIG. 1A illustrates an exemplary device and an exemplary conductive plate assembly for providing charging power to the exemplary device, according to some embodiments of the present disclosure.
FIG. 1B illustrates exemplary shapes of conductive plates for the exemplary conductive plate assembly in FIG. 1A, according to some embodiments of the present disclosure.
FIG. 1C illustrates maximum surface lengths of the exemplary shapes of conductive plates in FIG. 1B, according to some embodiments of the present disclosure.
FIG. 1D illustrates dimensions of the exemplary conductive plate assembly in FIG. 1A, according to some embodiments of the present disclosure.
FIG. 2 is a block diagram of an exemplary apparatus for providing charging power, according to some embodiments of the present disclosure.
FIGs. 3A, 3B, and 3C are diagrams of exemplary conductive plates, detector circuits, and detection operations in the exemplary apparatus in FIG. 2, according to some embodiments of the present disclosure.
FIGs. 4A and 4B are diagrams of exemplary conductive plates, detector circuits, selection circuits, and detection and selection operations in the exemplary apparatus in FIG. 2, according to some embodiments of the present disclosure, which are not covered by the claimed invention.
FIG. 4C is a diagram of an exemplary equivalent circuit connection between the exemplary device in FIG. 1A and the exemplary apparatus in FIG. 2, according to some embodiments of the present disclosure, which are not covered by the claimed invention.
FIGs. 5A and 5B are diagrams of exemplary conductive plates, detector circuits, selection circuits, and detection and selection operations in the exemplary apparatus in FIG. 2, according to some embodiments of the present disclosure, which are not covered by the claimed invention.
FIG. 6 is a flow chart of an exemplary method for providing charging power, according to some embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatus and methods consistent with aspects related to the invention as recited in the appended claims.

Disclosed embodiments include apparatus for providing charging power to a pair of external power charging terminals that are coupled to a power storage device of an external device. The external device includes a laptop, a tablet, a smartphone, an appliance, an electronic component, a gadget, a machine, a medical device, a vehicle, an unmanned vehicle, an automatic vehicle, or any other apparatus having a power storage device to be charged. The power storage device of the external device may be a rechargeable battery, a secondary battery, a storage battery, an electrostatic double-layer capacitor, an electrochemical pseudocapacitor, a hybrid capacitor, a lithium-ion capacitor, or any other energy storage device or component.

The power storage device of the external device is coupled to a pair of power charging terminals that are a part the external device or are terminals of a connection line or of a peripheral for power charging. The pair of power charging terminals are external to the apparatus for providing charging power and may be referred to as a pair of external power charging terminals in this disclosure. The pair of external power charging terminals are spaced apart by a predetermined distance. The predetermined distance is a distance that prevents two external power charging terminals from coupling to a same conductive plate of the apparatus for providing charging power. Additionally or alternatively, the predetermined distance may be a distance that ensures two external power charging terminals are coupled to two different conductive plates of the apparatus for providing charging power.

The apparatus for providing charging power includes a conductive plate assembly that includes a plurality of conductive plates. The conductive plate assembly is an assembly to be coupled to the pair of external power charging terminals for providing charging power. When the external device is coupled to the apparatus, two or more of the plurality of conductive plates are coupled to the pair of external power charging terminals to provide charging power. A conductive plate is a conductive component and used as a contact terminal to be coupled to one of the pair of external power charging terminals.

Each of the conductive plates has a surface. The surface is used to be coupled to one of the pair of external power charging terminals. A shape of the surface may be a circle, a triangle, a square, a hexagon, a rectangle, or any other polygon. The surface has a maximum surface length. The maximum surface length is greater than or equal to a length between any two points on the surface of the conductive plate. The maximum surface length of the shape is less than the predetermined distance, by which the pair of external power charging terminals are spaced apart from each other. Accordingly, the two external power charging terminals are prevented from coupling to the same conductive plate. As a result, the two external power charging terminals are coupled to two or more different conductive plates of the conductive plate assembly for receiving charging power.

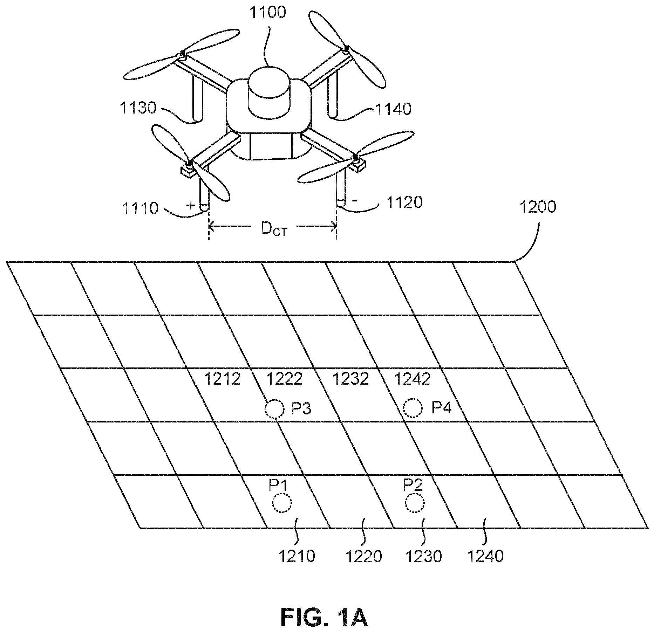

FIG. 1A illustrates an exemplary unmanned aerial vehicle (UAV) 1100 and an exemplary conductive plate assembly 1200 for providing charging power to exemplary UAV 1100, according to some embodiments of the present disclosure. As shown in FIG. 1A, conductive plate assembly 1200 includes a plurality of conductive plates, including conductive plates 1210, 1220, 1230, 1240, 1212, 1222, 1232, and 1242, for providing charging power to UAV 1100. UAV 1100 includes four landing legs 1110, 1120, 1130, and 1140. Landing legs 1110 and 1120 include positive and negative power charging terminals, respectively. The positive power charging terminal at landing leg 1110 is spaced apart from the negative power charging terminal at landing leg 1120 by a distance D_{CT}.

UAV 1100 is an external device to conductive plate assembly 1200. UAV 1110 includes a battery (not shown) to be charged. The positive and negative power charging terminals at the landing legs 1110 and 1120 are coupled (not shown) to the battery. When UAV 1100 needs to be charged, UAV 1100 lands, or is put, on conductive plate assembly 1200 so that the positive and negative power charging terminals at the landing legs 1110 and 1120 are coupled to, for example, conductive plates 1210 and 1230 at points P1 and P2, respectively, for receiving charging power.

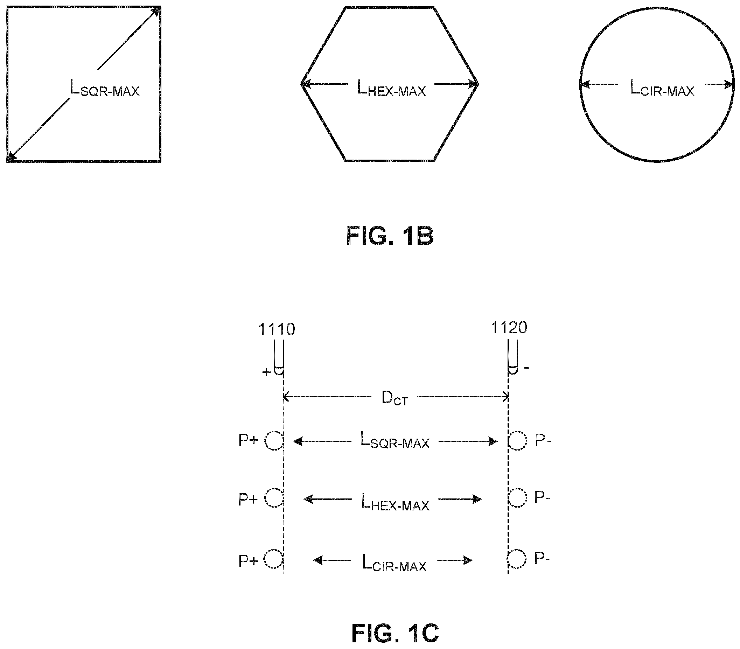

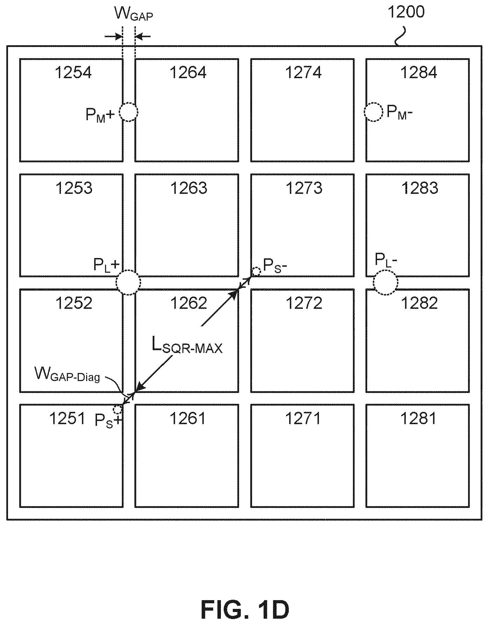

As shown in FIG. 1A, conductive plate assembly 1200 includes the plurality of conductive plates arranged as an array and separated from each other (FIG. 1D). Each of the conductive plates has, for example, a square surface. The square surface has a diagonal length that is a maximum surface length L_{SQR-MAX} (FIG. 1B). The maximum surface length (L_{SQR-MAX}) is greater than or equal to a length between any two points on the surface of the conductive plate. For example, the maximum surface length (L_{SQR-MAX}) of the conductive plate is greater than a side length between two points on two adjacent vertices. As another example, the maximum surface length (L_{SQR-MAX}) of the conductive plate is equal to a diagonal length of the conductive plate.

The maximum surface length (L_{SQR-MAX}) of the conductive plate is less than the distance (D_{CT}) by which the positive power charging terminal at landing leg 1110 is spaced apart from the negative power charging terminal at landing leg 1120. Accordingly, the positive and negative power charging terminals at landing legs 1110 and 1120 are prevented from coupling to a same one of the conductive plates of conductive plate assembly 1200. As a result, the positive and negative power charging terminals of UAV 1100 are coupled to two or more different conductive plates of conductive plate assembly 1200 for receiving charging power. For example, as shown in FIG. 1A, the positive and negative power charging terminals at landing legs 1110 and 1120 of UAV 1100 are coupled to conductive plates 1210 and 1230, respectively.

FIG. 1B illustrates exemplary shapes of conductive plates for exemplary conductive plate assembly 1200 in FIG. 1A, according to some embodiments of the present disclosure. For example, as shown at the left of FIG. 1B, a conductive plate may have a square surface. The square surface of the conductive plate has the maximum surface length L_{SQR-MAX}. The maximum surface length (L_{SQR-MAX}) of the conductive plate is less than the distance (D_{CT}) between the two external charging terminals, as described above with reference to FIG. 1A.

In some embodiments, conductive plate assembly 1200 may have a plurality of conductive plates with hexagonal surfaces. As shown in the middle of FIG. 1B, a hexagonal surface of a conductive plate has a diagonal length between two opposite vertices as a maximum surface length L_{HEX-MAX}. The maximum surface length (L_{HEX-MAX}) of the conductive plate is less than the distance (D_{CT}) between the two external charging terminals, similar to the description above for the square shape with reference to FIG. 1A.

In some embodiments, conductive plate assembly 1200 may have a plurality of conductive plates with circular surfaces. As shown in the right of FIG. 1B, a circular surface of a conductive plate has a diameter length as a maximum surface length L_{CIR-MAX}. The maximum surface length (L_{CIR-MAX}) of the conductive plate is less than the distance (D_{CT}) between the two external charging terminals, similar to the description above for the square shape with reference to FIG. 1A.

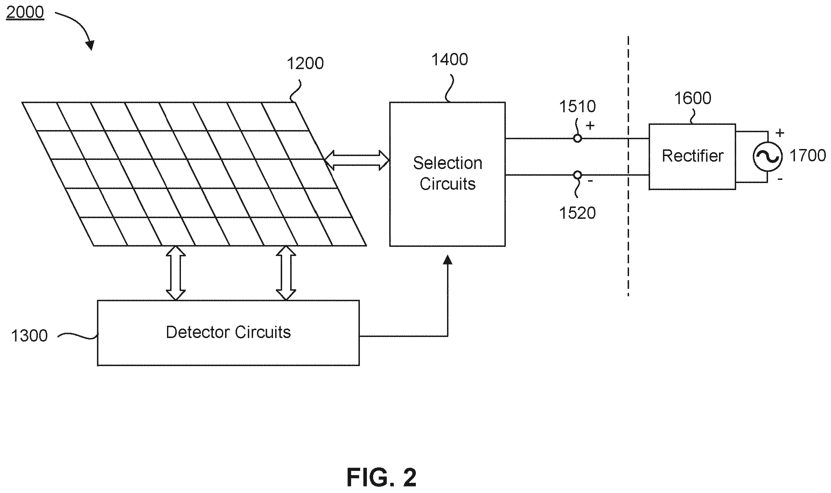

FIG. 1C illustrates maximum surface lengths of the exemplary shapes of conductive plates in FIG. 1B, according to some embodiments of the present disclosure. As shown in FIG. 1C, all of the maximum surface lengths (L_{SQR-MAX}, L_{HEX-MAX}, and L_{CIR-MAX} in FIG. 2) are less than the distance (D_{CT}) between the positive and negative power charging terminals at landing legs 1110 and 1120. When UAV 1100 lands, or is put, on conductive plate assembly 1200, the positive and negative power charging terminals at the landing legs 1110 and 1120 contact conductive plate assembly 1200 at contact points P+ and P- (FIG. 1C), respectively. The two contact points P+ and P- are spaced apart from each other by the distance D_{CT} that is greater than any of the maximum surface lengths (L_{SQR-MAX}, L_{HEX-MAX}, and L_{CIR-MAX} in FIG. 2). That is, the two contact points P+ and P- cannot be on a same conductive plate. This prevents a short circuit being formed between the positive and negative power charging terminals at the landing legs 1110 and 1120 when UAV 1100 lands, or is put, on conductive plate assembly 1200 in any orientation.

FIG. 1D illustrates dimensions of exemplary conductive plate assembly 1200 in FIG. 1A, according to some embodiments of the present disclosure. As shown in FIG. 1D, conductive plate assembly 1200 includes conductive plates 1251, 1252, 1253, 1254, 1261, 1262, 1263, 1264, 1271, 1272, 1273, 1274, 1281, 1282, 1283, and 1284, each having a square surface. Each of the square surfaces has a maximum surface length (L_{SQR-MAX}). There is a gap between any two adjacent conductive plates. The gap has a gap width W_{GAP} and a diagonal gap width W_{GAP-Diag}. The gaps may include insulation materials or empty spaces that prevent any two adjacent conductive plates from electrically coupling to each other.

When UAV 1100 lands, or is put, on conductive plate assembly 1200 (FIG. 1D), the positive and negative power charging terminals at the landing legs 1110 and 1120 (FIG. 1A) may contact two or more conductive plates at, for example, contact points P_{L}+ and P_{L}- (FIG. 1D), with each of contact points having a large contact area, respectively. As shown in FIG. 1D, the large contact areas of contact points P_{L}+ and P_{L}- have a dimension that is greater than the diagonal gap width (W_{GAP-Diag}) of the gap. When the dimension of a contact area (e.g., the large contact areas) is greater than the diagonal gap width (W_{GAP-Diag}) of the gap, the distance D_{CT} that is greater than the maximum surface length (L_{SQR-MAX}), can ensure the two external power charging terminals at the landing legs 1110 and 1120 contact two or more different conductive plates of conductive plate assembly 1200, as shown in FIG. 1D.

Alternatively, the positive and negative power charging terminals at the landing legs 1110 and 1120 (FIG. 1A) may contact two or more conductive plates at, for example, contact points P_{M}+ and P_{M}-(FIG. 1D) with a medium contact area, respectively, that is smaller than the large contact area of contact points P_{L}+ and P_{L}-. As shown in FIG. 1D, the medium contact areas of contact points P_{M}+ and P_{M}- have a dimension that is larger than the gap width (W_{GAP}) of the gap. When the dimension of a contact area (e.g., the medium contact areas) is greater than the gap width (W_{GAP}) and less than the diagonal width (W_{GAP-Diag}) of the gap, a distance D_{CT} that is greater than the maximum surface length (e.g., L_{SQR-MAX}) plus the diagonal gap width (W_{GAP-Diag}) (i.e., D_{CT} > L_{SQR-MAX} + W_{GAP-Diag}), can ensure two external power charging terminals at the landing legs 1110 and 1120 contact two or more different conductive plates of conductive plate assembly 1200. If a distance D_{CT} is greater than the maximum surface length (e.g., L_{SQR-MAX}) and less than the maximum surface length (e.g., L_{SQR-MAX}) plus the diagonal gap width (W_{GAP-Diag}) (i.e., L_{SQR-MAX} < D_{CT} < L_{SQR-MAX} + W_{GAP-Diag}), the two external power charging terminals at the landing legs 1110 and 1120 may contact two or more different conductive plates with a high probability. Nevertheless, it is also possible that one or both of the two external power charging terminals may contact conductive plate assembly 1200 at an intersection of gaps. In this situation, UAV 1100 may need to re-land or be shifted by a small distance to contact two or more conductive plates of conductive plate assembly 1200 for power charging.

Alternatively, the positive and negative power charging terminals at the landing legs 1110 and 1120 (FIG. 1A) may contact conductive plate assembly 1200 at, for example, contact points Ps+ and Ps-with a small contact area, respectively, that is smaller than the medium contact area of contact points P_{M}+ and P_{M}-. The small contact areas of contact points Ps+ and Ps- have a dimension that is smaller than the gap width (W_{GAP}) of the gap. When the dimension of a contact area (e.g., the small contact areas) is smaller than the gap width (W_{GAP}), a distance D_{CT} that is greater than the maximum surface length (e.g., L_{SQR-MAX}), may enable the two external power charging terminals at the landing legs 1110 and 1120 to contact two different conductive plates with a high probability. Nevertheless, it is possible that one or both of the two external power charging terminals at the landing legs 1110 and 1120 may contact conductive plate assembly 1200 on a gap area. In this situation, UAV 1100 may need to re-land or be shifted by a small distance or by a rotation of an angle to contact two conductive plates of conductive plate assembly 1200 for power charging.

Additionally or alternatively, a distance D_{CT} that is greater than the maximum surface length (e.g., L_{SQR-MAX}) plus two times the diagonal gap width (W_{GAP-Diag}) (i.e., D_{CT} > L_{SQR-MAX} + 2 × W_{GAP-Diag}), may let the two external power charging terminals at the landing legs 1110 and 1120 contact two different conductive plates with a high probability. Nevertheless, it is possible that one or both of the two external power charging terminals at the landing legs 1110 and 1120 may contact conductive plate assembly 1200 on a gap area. In this situation, UAV 1100 may need to re-land or be shifted by a small distance or by a rotation of an angle to contact two conductive plates of conductive plate assembly 1200 for power charging.

In some embodiments, in the apparatus for providing charging power, the plurality of conductive plates are arranged to be contiguous so that a top surface of the conductive plate assembly is substantially planar. Each of the conductive plates has length and width dimensions substantially the same as length and width dimensions of the other conductive plates. Each of the length and width dimensions of each of the conductive plates is less than the predetermined distance by which the pair of external power charging terminals at the landing legs 1110 and 1120 are spaced apart from each other. For example, as shown in FIGs. 1A and 1D, the conductive plates of conductive plate assembly 1200 are arranged to be contiguous so that a top face of conductive plate assembly 1200 is substantially planar. Thus, UAV 1100 may land or be put on the top face stably for charging. Each of the square conductive plates has length and width dimensions substantially the same as length and width dimensions of the other conductive plates. Each of the length and width dimensions of each of the conductive plates is less than the predetermined distance, e.g., the distance (D_{CT}) between the positive and negative power charging terminals at landing legs 1110 and 1120. The distance (D_{CT}) is predetermined to be greater than the maximum surface length (L_{SQR-MAX}) of the square surface on the left of FIG. 1B.

The apparatus for providing charging power also includes a plurality of detector circuits respectively coupled to corresponding ones of the plurality of conductive plates of the conductive plate assembly. The plurality of detector circuits may be configured to detect which two or more of the plurality of conductive plates are contacted by the pair of external power charging terminals via voltages, currents, pressures, lights, microwaves, sensing, any combination thereof, any other parameters, or any changes that occur. When the plurality of detector circuits detect that the two or more of the conductive plates are contacted, the detector circuits are configured to generate two or more detection signals. The detection signals may indicate the plurality of conductive plates are contacted and/or which two or more of conductive plates are contacted. The apparatus may be configured to supply charging power to the contacted two or more of the conductive plates based on the detection signals.

The apparatus for providing charging power also includes a plurality of selection circuits respectively coupled to corresponding ones of the plurality of conductive plates. The plurality of selection circuits are configured to electrically connect the two or more of the conductive plates that are contacted by the pair of external power charging terminals, to a pair of power-supply terminals for receiving a power supply voltage. For example, the plurality of selection circuits may be configured to electrically connect the contacted two or more of the conductive plates to the power-supply terminals based on the detection signals from the plurality of detector circuits.

FIG. 2 is a block diagram of an exemplary apparatus 2000 for providing charging power, according to some embodiments of the present disclosure. As shown in FIG. 2, apparatus 2000 includes conductive plate assembly 1200, detector circuits 1300, and selection circuits 1400. Detector circuits 1300 are coupled to conductive plate assembly 1200 and selection circuits 1400. Selection circuits 1400 are coupled to conductive plate assembly 1200 and detector circuits 1300 and have a pair of power-supply terminals 1510 and 1520 for receiving a power supply voltage. As shown in FIG. 2, the pair of power-supply terminals 1510 and 1520 may be coupled to a rectifier 1600 and a power source 1700.

Conductive plate assembly 1200 includes a plurality of conductive plates for providing charging power to an external device, as described above with reference to FIGs. 1A-1D.

Detector circuits 1300 are configured to detect which two or more of the conductive plates are contacted by the pair of external power charging terminals. When detector circuits 1300 detect two or more of the conductive plates are contacted, detector circuits 1300 are configured to send two or more detection signals to selection circuits 1400. The detection signals may correspond to the two or more conductive plates that are contacted by the external power charging terminals. Thus, the detection signals may indicate which two or more conductive plates are contacted. Additionally or alternatively, each of the detection signals may indicate that a corresponding one of the conductive plates is contacted by which one of the external power charging terminals. Apparatus 2000 may be configured to select and/or supply charging power to the contacted two or more of the conductive plates based on the detection signals.

Selection circuits 1400 are configured to receive the detection signals from detector circuits 1300 and electrically connect the contacted conductive plates to power-supply terminals 1510 and 1520 based on the detection signals. For example, when UAV 1100 lands, or is put, on conductive plates 1210 and 1230 (FIG. 1A), selection circuits 1400 are configured to receive two detection signals respectively corresponding to conductive plates 1210 and 1230 (FIG. 1A). Selection circuits 1400 are configured to electrically connect conductive plate 1210 to power-supply terminal 1510 based on one of the detection signals corresponding to conductive plate 1210. Selection circuits 1400 are also configured to electrically connect conductive plate 1230 to power-supply terminal 1520 based on the other one of the detection signals corresponding to conductive plate 1230. As a result, selection circuits 1400 electrically connect the positive and negative power charging terminals at the landing legs 1110 and 1120 of UAV 1100, via conductive plates 1210 and 1230 (FIG. 1A), to positive and negative power-supply terminals 1510 and 1520, respectively, for receiving charging power.

Rectifier 1600 and power source 1700 are configured to provide a power supply voltage to the pair of power-supply terminals 1510 and 1520. For example, rectifier 1600 may convert alternating current (AC) power from power source 1700 to direct current (DC) power as the power supply to the pair of power-supply terminals 1510 and 1520 for charging UAV 1100 (FIG. 1A).

In some embodiments, instead of being coupled to rectifier 1600 and power source 1700, the pair of power-supply terminals 1510 and 1520 may be coupled to any other devices that provide charging power, such as various power supplies, power adapters, power sources, and power storage devices.

In some embodiments, a to-be-charged external device may include a rectifier. In such embodiments, apparatus 2000 is configured to provide, for example, AC power to the contacted conductive plates. Thus, instead of being coupled to rectifier 1600, power-supply terminals 1510 and 1520 are coupled to an AC power source. Selection circuits 1400 may have similar functions as disclosed herein and are able to deliver AC power from power-supply terminals 1510 and 1520 to the contacted conductive plates for charging the power storage device of the external device.

As described above, in the apparatus for providing charging power, the plurality of detector circuits may be configured to detect which two or more of the plurality of conductive plates are contacted by the pair of external power charging terminals by voltages, currents, pressures, lights, microwaves, sensing, any combination thereof, any other parameters, or any changes that occur. For example, in some embodiments, each of the detector circuits is configured to be responsive to a voltage on one of the external power charging terminals to provide a detection signal when the corresponding conductive plate contacts the one of the external power charging terminals. As described above, the pair of external power charging terminals are coupled to the power storage device of the external device. Thus, the two power charging terminals have a voltage as the power storage device, no matter whether the power storage device of the external device requires to be charged or not.

When one of the external power charging terminals contacts one of the conductive plates, the one of the conductive plates also has the voltage of the one of the external power charging terminals. The corresponding one of the detector circuits, coupled to the contacted one of the conductive plates, is configured to provide a detection signal in response to the voltage on the contacted one of the conductive plates. The detection signal represents that the one of the conductive plates is contacted by the one of the external power charging terminals. The apparatus is configured to selectively supply charging power to the contacted one of the conductive plates based on the detection signal.

When UAV 1100 lands, or is put, on conductive plate assembly 1200, each of the external power charging terminals at landing legs 1110 and 1120 may contact one or more conductive plates. Thus, the pair of external power charging terminals may contact two or more conductive plates. Each of detector circuits corresponding to the contacted two or more conductive plates is configured to be responsive to a voltage on one of the external power charging terminals to provide a detection signal for apparatus 2000 to electrically connect the corresponding conductive plate to power-supply terminal 1510 or 1520. The voltage on each of the external power charging terminals may be a positive voltage or a negative voltage. In accordance with the positive or negative voltage, selection circuits 1400 select power-supply terminal 1510 or 1520 to be electrically coupled to the corresponding conductive plate.

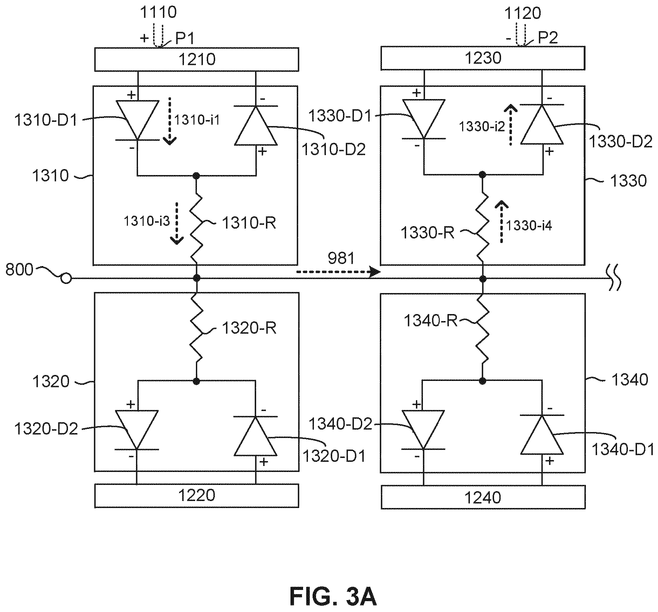

FIG. 3A is a diagram of exemplary conductive plates 1210, 1220, 1230, and 1240, detector circuits 1310, 1320, 1330, and 1340, and detection operations in exemplary apparatus 2000 in FIG. 2, according to some embodiments of the present disclosure. As shown in FIG. 3A, conductive plate assembly 1200 (FIGs. 1A and 2) includes conductive plates 1210, 1220, 1230, and 1240. Detector circuits 1300 (FIG. 2) include detector circuits 1310, 1320, 1330, and 1340. Detector circuits 1310, 1320, 1330, and 1340 are respectively coupled to conductive plates 1210, 1220, 1230, and 1240, and are coupled to an electrically common circuit point 800.

As shown in FIG. 3A, each of detector circuits 1310, 1320, 1330, and 1340 has first and second diodes coupled in parallel and a resistor. A positive terminal of the first diode and a negative terminal of the second diode are coupled to the corresponding conductive plate. A negative terminal of the first diode and a positive terminal of the second diode are coupled to the resistor. The resistor is coupled to electrically common circuit point 800.

Detector circuit 1310 includes diodes 1310-D1 and 1310-D2 and a resistor 1310-R. Diode 1310-D1 has a positive terminal coupled to conductive plate 1210 and a negative terminal coupled to a first terminal of resistor 1310-R. Diode 1310-D2 has a negative terminal coupled to conductive plate 1210 and a positive terminal coupled to the first terminal of resistor 1310-R. Resistor 1310-R has a second terminal coupled to electrically common circuit point 800. Electrically common circuit point 800 may be a connection node, a conductive line, or a plurality of conductive lines coupled together, on which each node has a same voltage level.

Detector circuit 1320 includes diodes 1320-D1 and 1320-D2 and a resistor 1320-R coupled to each other, to conductive plate 1220, and to electrically common circuit point 800 in a similar manner as diodes 1310-D1 and 1310-D2 and resistor 1310-R coupled to each other, to conductive plate 1210, and to electrically common circuit point 800, as described above.

Detector circuit 1330 includes diodes 1330-D1 and 1330-D2 and a resistor 1330-R coupled to each other, to conductive plate 1230, and to electrically common circuit point 800 in a similar manner as diodes 1310-D1 and 1310-D2 and resistor 1310-R coupled to each other, to conductive plate 1210, and to electrically common circuit point 800, as described above.

Detector circuit 1340 includes diodes 1340-D1 and 1340-D2 and a resistor 1340-R coupled to each other, to conductive plate 1240, and to electrically common circuit point 800 in a similar manner as diodes 1310-D1 and 1310-D2 and resistor 1310-R coupled to each other, to conductive plate 1210, and to electrically common circuit point 800, as described above.

When UAV 1100 lands, or is put, on apparatus 2000 to receive charging power, the positive and negative power charging terminals at landing legs 1110 and 1120 may contact conductive plates 1210 and 1230 at contact points P1 and P2, respectively, as shown in FIGs. 1A and 3A. The power charging terminal at landing leg 1110 has a positive voltage sourced from the battery of UAV 1100. Because the positive power charging terminal contacts conductive plate 1210, conductive plate 1210 also has the positive voltage. When conductive plate 1210 has the positive voltage, diode 1310-D1 is forward biased and turned on because the positive terminal of diode 1310-D1 is coupled to conductive plate 1210. Diode 1310-D2 is reverse biased and turned off because the negative terminal of diode 1310-D2 is coupled to conductive plate 1210.

The negative power charging terminal at landing leg 1120 has a negative voltage sourced from the battery of UAV 1100. Because the negative power charging terminal contacts conductive plate 1230, conductive plate 1230 has the negative voltage. When conductive plate 1230 has the negative voltage, diode 1330-D2 is forward biased and turned on because the negative terminal of diode 1330-D2 is coupled to conductive plate 1230. Diode 1330-D1 is reverse biased and turned off because the positive terminal of diode 1330-D1 is coupled to conductive plate 1230.

When diode 1310-D1 of detector circuit 1310 and diode 1330-D2 of detector circuit 1330 are turned on, a conductive path is formed, starting from conductive plate 1210, sequentially via diode 1310-D1, resistor 1310-R, electrically common circuit point 800, resistor 1330-R, and diode 1330-D2, to conductive plate 1230. Because conductive plates 1210 and 1230 have positive and negative voltages, respectively, a current flows from conductive plate 1210, via the conductive path, to conductive plate 1230. The current flows through diode 1310-D1 as a current 1310-i1, through resistor 1310-R as a current 1310-i3, through electrically common circuit point 800 as a current 981, through resistor 1330-R as a current 1330-i4, and through diode 1330-D2 as a current 1330-i2, as shown in FIG. 3A.

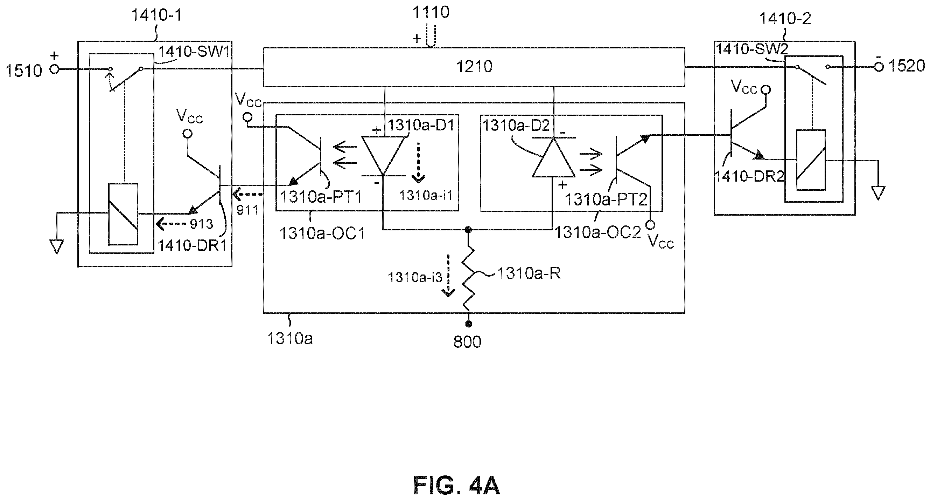

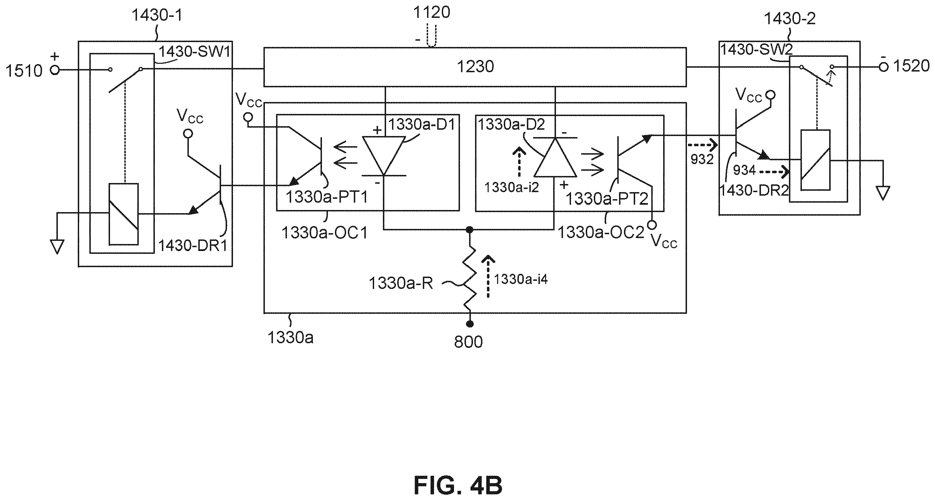

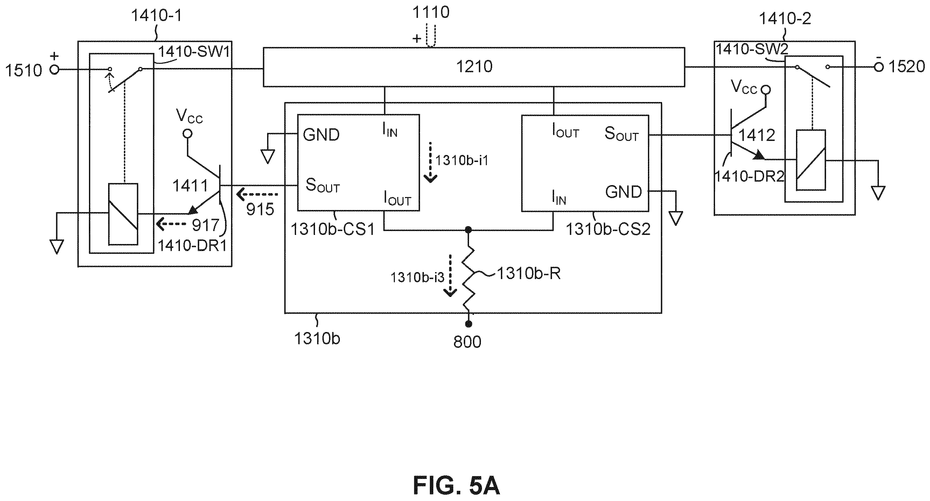

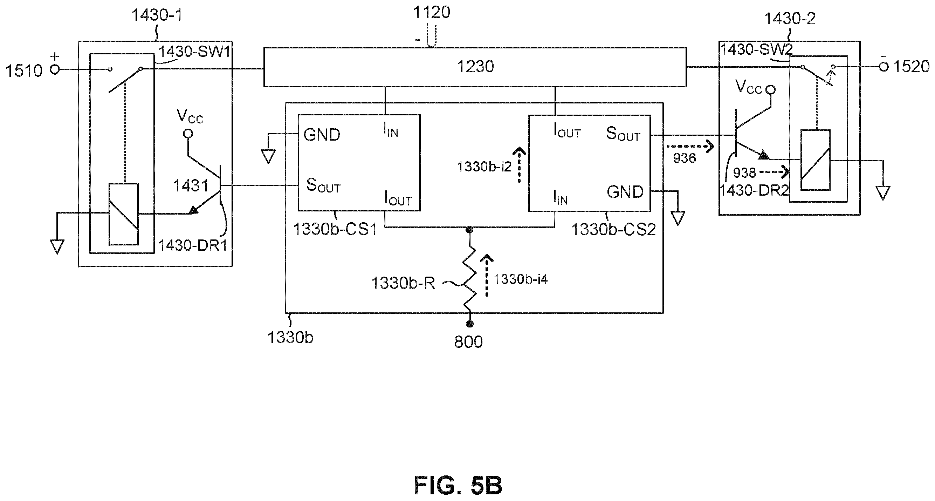

Current 1310-i1 and/or current 1310-i3 may trigger or be used to cause a first selection circuit, corresponding to detector circuit 1310, to electrically connect conductive plate 1210 to positive power-supply terminal 1510, in a similar manner as described below with reference to FIG. 4A or 5A. Current 1330-i2 and/or current 1330-i4 may trigger or be used to cause a second selection circuit, corresponding to detector circuit 1330, to electrically connect conductive plate 1230 to negative power-supply terminal 1520, in a similar manner as described below with reference to FIG. 4B or 5B.

In FIG. 3A, conductive plates 1220 and 1240 are not contacted by the external power charging terminals. Thus, there is no current on corresponding detector circuits 1320 and 1340. There is also no current on other ones of detector circuits 1300 corresponding to conductive plates that are not contacted by the external power charging terminals.

In addition to the conductive plates and detector circuits shown in FIG. 3A,conductive plate assembly 1200 (FIGs. 1A and 2) may also include other conductive plates. Detector circuits 1300 (FIG. 2) may also include other detector circuits respectively coupled to the other conductor plates. Such other detector circuits are also coupled to electrically common circuit point 800. This enables apparatus 2000 to provide charging power selectively via any two or more conductive plates contacted by the external power charging terminals. Thus, UAV 1100 can land, or be put, on apparatus 2000 without an aligning operation.

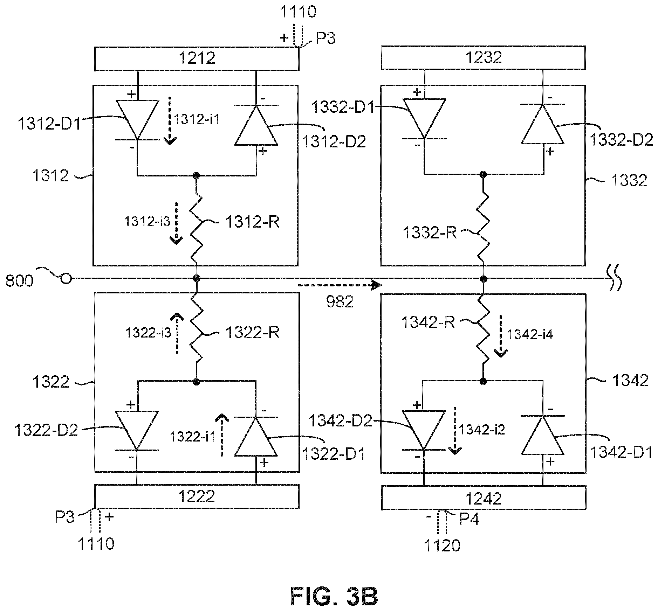

FIG. 3B is a diagram of exemplary conductive plates 1212, 1222, 1232, and 1242, detector circuits 1312, 1322, 1332, and 1342, and detection operations in exemplary apparatus 2000 in FIG. 2, according to some embodiments of the present disclosure. As shown in FIG. 3B, conductive plate assembly 1200 (FIGs. 1A and 2) includes conductive plates 1212, 1222, 1232, and 1242. Detector circuits 1300 (FIG. 2) include detector circuits 1312, 1322, 1332, and 1342. Detector circuits 1312, 1322, 1332, and 1342 are respectively coupled to conductive plates 1212, 1222, 1232, and 1242, and are coupled to electrically common circuit point 800.

As shown in FIG. 3B, each of detector circuits 1312, 1322, 1332, and 1342 has first and second diodes coupled in parallel and a resistor. The first and second diodes and the resistor are coupled to each other, to the corresponding conductive plate, and to electrically common circuit point 800 in a similar manner as the first and second diodes and the resistor in each of detector circuits 1310, 1320, 1330, and 1340, as described above with reference to FIG. 3A.

Specifically, detector circuit 1312 includes diodes 1312-D1 and 1312-D2 and a resistor 1312-R. Diode 1312-D1 has a positive terminal coupled to conductive plate 1212 and a negative terminal coupled to a first terminal of resistor 1312-R. Diode 1312-D2 has a negative terminal coupled to conductive plate 1212 and a positive terminal coupled to the first terminal of resistor 1312-R. Resistor 1312-R has a second terminal coupled to electrically common circuit point 800.

Detector circuit 1322 includes diodes 1322-D1 and 1322-D2 and a resistor 1322-R coupled to each other, to conductive plate 1222, and electrically common circuit point 800 in a similar manner as diodes 1312-D1 and 1312-D2 and resistor 1312-R coupled to each other, to conductive plate 1212, and electrically common circuit point 800, as described above.

Detector circuit 1332 includes diodes 1332-D1 and 1332-D2 and a resistor 1332-R coupled to each other, to conductive plate 1232, and electrically common circuit point 800 in a similar manner as diodes 1312-D1 and 1312-D2 and resistor 1312-R coupled to each other, to conductive plate 1212, and electrically common circuit point 800, as described above.

Detector circuit 1342 includes diodes 1342-D1 and 1342-D2 and a resistor 1342-R coupled to each other, to conductive plate 1242, and electrically common circuit point 800 in a similar manner as diodes 1312-D1 and 1312-D2 and resistor 1312-R coupled to each other, to conductive plate 1212, and electrically common circuit point 800, as described above.

When UAV 1100 lands, or is put, on apparatus 2000 to receive charging power, the positive power charging terminal at landing leg 1110 may contact both conductive plates 1212 and 1222 at contact point P3, as shown in FIG. 3B, when landing leg 1110 is positioned in a groove between conductive plates 1212 and 1222. The negative power charging terminal at landing leg 1120 may contact conductive plate 1242 at contact point P4, as shown in FIG. 3B.

The positive power charging terminal at landing leg 1110 has the positive voltage sourced from the battery of UAV 1100. Because the positive power charging terminal contacts conductive plates 1212 and 1222, conductive plates 1212 and 1222 both have the positive voltage. When conductive plate 1212 has the positive voltage, diode 1312-D1 is forward biased and turned on because the positive terminal of diode 1312-D1 is coupled to conductive plate 1212. Diode 1312-D2 is reverse biased and turned off because the negative terminal of diode 1312-D2 is coupled to conductive plate 1212. When conductive plate 1222 has the positive voltage, diode 1322-D1 is forward biased and turned on because the positive terminal of diode 1322-D1 is coupled to conductive plate 1222. Diode 1322-D2 is reverse biased and turned off because the negative terminal of diode 1322-D2 is coupled to conductive plate 1222.

The negative power charging terminal at landing leg 1120 has the negative voltage sourced from the battery of UAV 1100. Because the negative power charging terminal contacts conductive plate 1242, conductive plate 1242 has the negative voltage. When conductive plate 1242 has the negative voltage, diode 1342-D2 is forward biased and turned on because the negative terminal of diode 1342-D2 is coupled to conductive plate 1242. Diode 1342-D1 is reverse biased and turned off because the positive terminal of diode 1342-D1 is coupled to conductive plate 1242.

When diode 1312-D1 of detector circuit 1312 and diode 1342-D2 of detector circuit 1342 are turned on, a first conductive path is formed, starting from conductive plate 1212, sequentially via diode 1312-D1, resistor 1312-R, electrically common circuit point 800, resistor 1342-R, and diode 1342-D2, to conductive plate 1242. Because conductive plates 1212 and 1242 have positive and negative voltages, respectively, a first current flows from conductive plate 1212, via the first conductive path, to conductive plate 1242. The first current flows through diode 1312-D1 as a current 1312-i1, through resistor 1312-R as a current 1312-i3, through electrically common circuit point 800 as part of a current 982, through resistor 1342-R as part of a current 1342-i4, and through diode 1342-D2 as part of a current 1342-i2, as shown in FIG. 3B.

In addition, when diode 1322-D1 of detector circuit 1322 and diode 1342-D2 of detector circuit 1342 are turned on, a second conductive path is formed, starting from conductive plate 1222, sequentially via diode 1322-D1, resistor 1322-R, electrically common circuit point 800, resistor 1342-R, and diode 1342-D2, to conductive plate 1242. Because conductive plates 1222 and 1242 have positive and negative voltages, respectively, a second current flows from conductive plate 1222, via the second conductive path, to conductive plate 1242. The second current flows through diode 1322-D1 as a current 1322-i1, through resistor 1322-R as current 1322-i3, through electrically common circuit point 800 as part of current 982, through resistor 1342-R as part of current 1342-i4, and through diode 1342-D2 as part of current 1342-i2, as shown in FIG. 3B.

Current 1312-i1 and/or current 1312-i3 may trigger or be used to cause a first selection circuit, corresponding to detector circuit 1312, to electrically connect conductive plate 1212 to postive power-supply terminal 1510, in a similar manner as described below with reference to FIG. 4A or 5A. Current 1322-i1 and/or current 1322-i3 may trigger or be used to cause a second selection circuit, corresponding to detector circuit 1322, to electrically connect conductive plate 1222 to positive power-supply terminal 1510, in a similar manner as described below with reference to FIG. 4A or 5A. Current 1342-i2 and/or current 1342-i4 may trigger or be used to cause a third selection circuit, corresponding to detector circuit 1342, to electrically connect conductive plate 1242 to negative power-supply terminal 1520, in a similar manner as described below with reference to FIG. 4B or 5B.

In FIG. 3B, conductive plate 1232 is not contacted by the external power charging terminals. Thus, there is no current on corresponding detector circuit 1332. There is also no current on other ones of detector circuits 1300 corresponding to conductive plates that are not contacted by the external power charging terminals.

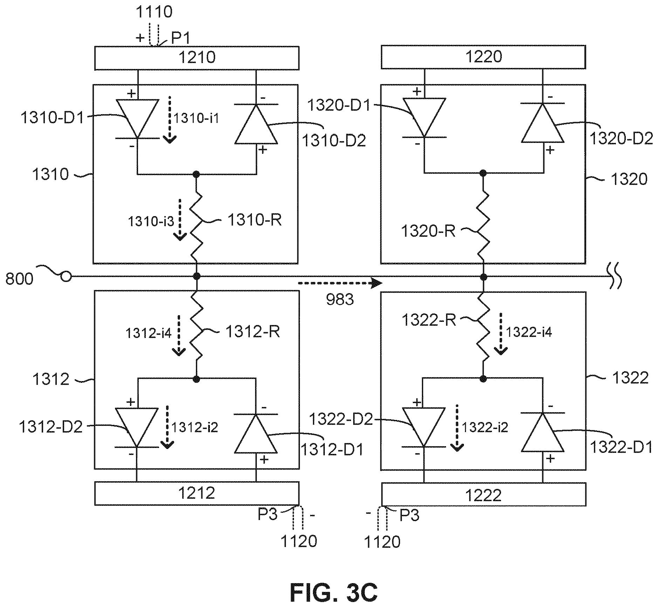

FIG. 3C is a diagram of exemplary conductive plates 1210, 1212, 1220, and 1222, detector circuits 1310, 1312, 1320, and 1322, and detection operations in exemplary apparatus 2000 in FIG. 2, according to some embodiments of the present disclosure. As shown in FIG. 3C, conductive plate assembly 1200 (FIGs. 1 and 2) includes conductive plates 1210, 1212, 1220, and 1222. Detector circuits 1300 (FIG. 2) include detector circuits 1310, 1312, 1320, and 1322. Detector circuits 1310, 1312, 1320, and 1322 are respectively coupled to conductive plates 1210, 1212, 1220, and 1222, and are coupled to electrically common circuit point 800.

As shown in FIG. 3C, each of detector circuits 1310, 1312, 1320, and 1322 has first and second diodes coupled in parallel and a resistor. The first and second diodes and the resistor are coupled to each other, to the corresponding conductive plate, and to electrically common circuit point 800 in a similar manner as the first and second diodes and the resistor in each of detector circuits 1310, 1320, 1330, and 1340, as described above with reference to FIG. 3A.

Specifically, detector circuit 1310 includes diodes 1310-D1 and 1310-D2 and resistor 1310-R coupled as described above with reference to FIG. 3A. Detector circuit 1312 includes diodes 1312-D1 and 1312-D2 and resistor 1312-R coupled as described above with reference to FIG. 3B. Detector circuit 1320 includes diodes 1320-D1 and 1320-D2 and resistor 1320-R coupled as described above with reference to FIG. 3A. Detector circuit 1322 includes diodes 1322-D1 and 1322-D2 and resistor 1322-R coupled as described above with reference to FIG. 3B.

When UAV 1100 lands, or is put, on apparatus 2000 to receive charging power, the positive power charging terminal at landing leg 1110 may contact conductive plate 1210 at contact point P1, as shown in FIG. 3C. The negative power charging terminal at landing leg 1120 may contact both conductive plates 1212 and 1222 at contact point P3, as shown in FIG. 3C, when landing leg 1120 is positioned in the groove between conductive plates 1212 and 1222.

The positive power charging terminal at landing leg 1110 has the positive voltage sourced from the battery of UAV 1100. Because the positive power charging terminal contacts conductive plate 1210, conductive plate 1210 has the positive voltage. When conductive plate 1210 has the positive voltage, diodes 1310-D1 and 1310-D2 of detector circuit 1310 operate as described above with reference to FIG. 3A.

The negative power charging terminal at landing leg 1120 has the negative voltage sourced from the battery of UAV 1100. Because the negative power charging terminal contacts conductive plates 1212 and 1222, conductive plates 1212 and 1222 have the negative voltage. When conductive plate 1212 has the negative voltage, diode 1312-D2 is forward biased and turned on because the negative terminal of diode 1312-D2 is coupled to conductive plate 1212. Diode 1312-D1 is reverse biased and turned off because the positive terminal of diode 1312-D1 is coupled to conductive plate 1212. When conductive plate 1222 has the negative voltage, diode 1322-D2 is forward biased and turned on because the negative terminal of diode 1322-D2 is coupled to conductive plate 1222. Diode 1322-D1 is reverse biased and turned off because the positive terminal of diode 1322-D1 is coupled to conductive plate 1222.

When diode 1310-D1 of detector circuit 1310 and diode 1312-D2 of detector circuit 1312 are turned on, a first conductive path is formed, starting from conductive plate 1210, sequentially via diode 1310-D1, resistor 1310-R, electrically common circuit point 800, resistor 1312-R, and diode 1312-D2, to conductive plate 1212. Because conductive plates 1210 and 1212 have positive and negative voltages, respectively, a first current flows from conductive plate 1210, via the first conductive path, to conductive plate 1212. The first current flows through diode 1310-D1 as part of current 1310-i1, through resistor 1310-R as part of current 1310-i3, through electrically common circuit point 800, through resistor 1312-R as a current 1312-i4, and through diode 1312-D2 as a current 1312-i2, as shown in FIG. 3C.

In addition, when diode 1310-D1 of detector circuit 1310 and diode 1322-D2 of detector circuit 1322 are turned on, a second conductive path is formed, starting from conductive plate 1210, sequentially via diode 1310-D1, resistor 1310-R, electrically common circuit point 800, resistor 1322-R, and diode 1322-D2, to conductive plate 1222. Because conductive plates 1210 and 1222 have positive and negative voltages, respectively, a second current flows from conductive plate 1210, via the second conductive path, to conductive plate 1222. The second current flows through diode 1310-D1 as part of current 1310-i1, through resistor 1310-R as part of current 1310-i3, through electrically common circuit point 800 as a curent 983, through resistor 1322-R a current 1322-i4, and through diode 1322-D2 as a current 1322-i2, as shown in FIG. 3C.

Current 1310-i1 and/or current 1310-i3 may trigger or be used to cause a first selection circuit, corresponding to detector circuit 1310, to electrically connect conductive plate 1210 to postive power-supply terminal 1510, in a similar manner as described below with reference to FIG. 4A or 5A. Current 1312-i2 and/or current 1312-i4 may trigger or be used to cause a second selection circuit, corresponding to detector circuit 1312, to electrically connect conductive plate 1212 to negative power-supply terminal 1520, in a similar manner as described below with reference to FIG. 4B or 5B. Current 1322-i2 and/or current 1322-i4 may trigger or be used to cause a third selection circuit, corresponding to detector circuit 1322, to electrically connect conductive plate 1222 to negative power-supply terminal 1520, in a similar manner as described below with reference to FIG. 4B or 5B.

In FIG. 3C, conductive plate 1220 is not contacted by the external power charging terminals. Thus, there is no current on corresponding detector circuit 1320. There is also no current on other ones of detector circuits 1300 corresponding to conductive plates that are not contacted by the external power charging terminals.

As described above, the apparatus for providing charging power includes the plurality of selection circuits respectively coupled to corresponding ones of the plurality of conductive plates. The selection circuits include a pair of power-supply terminals for receiving a power supply voltage. Each of the selection circuits is further coupled to receive a detection signal from a corresponding one of the detector circuits and configured to electrically connect the corresponding conductive plate to one of the power-supply terminals in response to receiving the detection signal.

For example, selection circuits 1400 (FIG. 2) includes a plurality of selection circuits respectively coupled to corresponding ones of the plurality of conductive plates. The selection circuits are coupled to power-supply terminals 1510 and 1520 (FIG. 2) for receiving a power supply voltage. Each of selection circuits 1400 is further coupled to receive a detection signal from a corresponding one of detector circuits 1300 and configured to electrically connect the corresponding conductive plate to power-supply terminal 1510 or 1520 in response to receiving the detection signal. The detection signal may be, for example, current 1310-i1 (FIG. 3A), 1310-i3 (FIG. 3A), 1330-i2 (FIG. 3A), 1330-i4 (FIG. 3A), 1312-i1 (FIG. 3B), 1312-i3 (FIG. 3B), 1322-i1 (FIG. 3B), 1322-i3 (FIG. 3B), 1342-i2 (FIG. 3B), 1342-i4 (FIG. 3B), 1310-i1 (FIG. 3C), 1310-i3 (FIG. 3C), 1312-i2 (FIG. 3C), 1312-i4 (FIG. 3C), 1322-i2 (FIG. 3C), or 1322-i4 (FIG. 3C) in one of detector circuits 1300 corresponding to a conductive plate contacted by one of the external power charging terminals.

In some embodiments not covered by the claimed invention, FIG. 4A is a diagram of exemplary conductive plate 1210, a detector circuit 1310a, selection circuits 1410-1 and 1410-2, and detection and selection operations in exemplary apparatus 2000 in FIG. 2. As shown in FIG. 4A, conductive plate assembly 1200 (FIG. 2) includes conductive plate 1210. Detector circuits 1300 (FIGs. 1 A and 2) include detector circuit 1310a. Conductive plate 1210 is coupled to detector circuit 1310a. Selection circuits 1400 include selection circuits 1410-1 and 1410-2 coupled to corresponding conductive plate 1210. Selection circuit 1410-1 is coupled between conductive plate 1210 and positive power-supply terminal 1510. Selection circuit 1410-2 is coupled between conductive plate 1210 and negative power-supply terminal 1520.

Detector circuit 1310a includes optocouplers 1310a-OC1 and 1310a-OC2 and a resistor 1310a-R. Optocoupler 1310a-OC1 includes a light-emitting diode (LED) 1310a-D1 and a phototransistor 1310aPT1. Optocoupler 1310a-OC2 includes an LED 1310a-D2 and a phototransistor 1310a-PT2. LEDs 1310a-D1 and 1310a-D2 and resistor 1310a-R are coupled to each other, to conductive plate 1210, and to electrically common circuit point 800 in a similar manner as diodes 1310-D1 and 1310-D2 and resistor 1310-R coupled to each other, to conductive plate 1210, and to electrically common circuit point 800, as described above with reference to FIG. 3A. Specifically, as shown in FIG. 4A, a positive terminal of LED 1310a-D1 and a negative terminal of LED 1310a-D2 are coupled to corresponding conductive plate 1210. A negative terminal of LED 1310a-D1 and a positive terminal of LED 1310a-D2 are coupled to a first terminal of resistor 1310a-R. A second terminal of resistor 1310a-R is coupled to electrically common circuit point 800.

Phototransistor 1310a-PT1 includes an NPN phototransistor. A collector terminal of phototransistor 1310a-PT1 is coupled to a positive-voltage supply Vcc. An emitter terminal of phototransistor 1310a-PT1 is coupled to selection circuit 1410-1. Phototransistor 1310a-PT2 includes an NPN phototransistor. A collector terminal of phototransistor 1310a-PT2 is coupled to the positive-voltage supply Vcc. An emitter terminal of phototransistor 1310a-PT2 is coupled to selection circuit 1410-2.

Selection circuit 1410-1 includes a relay switch 1410-SW1 and a driver circuit 1410-DR1. Relay switch 1410-SW1 is coupled between corresponding conductive plate 1210 and positive power-supply terminal 1510. Driver circuit 1410-DR1 is coupled between relay switch 1410-SW1 and phototransistor 1310a-PT1. Driver circuit 1410-DR1 includes an NPN bipolar junction transistor (BJT). A collector terminal of the BJT of driver circuit 1410-DR1 is coupled to the positive-voltage supply Vcc. A base terminal of the BJT of driver circuit 1410-DR1 is coupled to the emitter terminal of phototransistor 1310a-PT1. An emitter terminal of the BJT of driver circuit 1410-DR1 is coupled to relay switch 1410-SW1. Driver circuit 1410-DR1 is coupled to relay switch 1410-SW1 to provide a first switching signal to switch on relay switch 1410-SW1 to electrically connect corresponding conductive plate 1210 to positive power-supply terminal 1510 when phototransistor 1310a-PT1 receives light from LED 1310a-D1.

Selection circuit 1410-2 includes a relay switch 1410-SW2 and a driver circuit 1410-DR2. Relay switch 1410-SW2 is coupled between corresponding conductive plate 1210 and negative power-supply terminal 1520. Driver circuit 1410-DR2 is coupled between relay switch 1410-SW2 and phototransistor 1310a-PT2. Driver circuit 1410-DR2 includes an NPN BJT. A collector terminal of the BJT of driver circuit 1410-DR2 is coupled to the positive-voltage supply Vcc. A base terminal of the BJT of driver circuit 1410-DR2 is coupled to the emitter terminal of phototransistor 1310a-PT2. An emitter terminal of the BJT of driver circuit 1410-DR2 is coupled to relay switch 1410-SW2. Driver circuit 1410-DR2 is coupled to relay switch 1410-SW2 to provide a second switching signal to switch on relay switch 1410-SW2 to electrically connect corresponding conductive plate 1210 with negative power-supply terminal 1520 when phototransistor 1310a-PT2 receives light from LED 1310a-D2.

When UAV 1100 lands, or is put, on apparatus 2000 to receive charging power, the positive and negative power charging terminals at landing legs 1110 and 1120 contact, for example, conductive plates 1210 and 1230 at contact points P1 and P2, respectively, as shown in FIGs. 4A and 4B. This is the same landing as described above with reference to FIG. 3A. Thus, LEDs 1310a-D1 and 1310a-D2 and resistor 1310a-R operate in a similar manner as diodes 1310-D1 and 1310-D2 and resistor 1310-R, as described above with reference to FIG. 3A, except that LED 1310a-D1 emits light to phototransistor 1310a-PT1 when LED 1310a-D1 is turned on, or LED 1310a-D2 emits light to phototransistor 1310a-PT2 when LED 1310a-D2 is turned on.

Specifically, because the positive power charging terminal contacts conductive plate 1210, conductive plate 1210 has the positive voltage. When conductive plate 1210 has the positive voltage, LED 1310a-D1 is forward biased and turned on because the positive terminal of LED 1310a-D1 is coupled to conductive plate 1210. LED 1310a-D2 is reverse biased and turned off because the negative terminal of LED 1310a-D2 is coupled to conductive plate 1210.

When LED 1310a-D1 (FIG. 4A) of detector circuit 1310a (FIG. 4A) and an LED 1330a-D2 (FIG. 4B) of a detector circuit 1330a (FIG. 4B) are turned on, a conductive path is formed, starting from conductive plate 1210, sequentially via LED 1310a-D1, resistor 1310a-R, electrically common circuit point 800, a resistor 1330a-R, and LED 1330a-D2, to conductive plate 1230. Because conductive plates 1210 and 1230 have positive and negative voltages, respectively, a current flows from conductive plate 1210, via the conductive path, to conductive plate 1230. The current flows through LED 1310a-D1 as a current 1310a-i1 and through resistor 1310a-R as a current 1310a-i3, as shown in FIG. 4A.

When LED 1310a-D1 is turned on (i.e., current 1310a-i1 flows through LED 1310a-D1), LED 1310a-D1 is configured to emit light to phototransistor 1310a-PT1. When phototransistor 1310a-PT1 receives the light from LED 1310a-D1, phototransistor 1310a-PT1 is configured to transmit a detection signal, e.g., a current 911 (FIG. 4A), to driver circuit 1410-DR1 of selection circuit 1410-1. After driver circuit 1410-DR1 receives the detection signal (current 911), driver circuit 1410-DR1 is configured to drive and/or trigger, by a current 913 (FIG. 4A), relay switch 1410-SW1 to switch on to electrically connect conductive plate 1210 to positive power-supply terminal 1510.

At the same time, LED 1310a-D2 is turned off and does not emit light to phototransistor 1310a-PT2. That is, phototransistor 1310a-PT2 does not receive light from LED 1310a-D2 and does not transmit any signal to driver circuit 1410-DR2 of selection circuit 1410-2. Thus, relay switch 1410-SW2 remains switched-off. As a result, conductive plate 1210 is not electrically connected to negative power-supply terminal 1520. That is, selection circuits 1410-1 and 1410-2 together are configured to electrically connect conductive plate 1210 to positive power-supply terminal 1510 when the positive power charging terminal at landing leg 1110 contacts conductive plate 1210.

If instead of the positive power charging terminal, the negative power charging terminal at landing leg 1120 contacts conductive plates 1210, LED 1310a-D2, phototransistor 1310a-PT2, driver circuit 1410-DR2, and relay switch 1410-SW2 are configured to operate as an LED 1330a-D2, a phototransistor 1330a-PT2, a driver circuit 1430-DR2, and a relay switch 1430-SW2 (FIG. 4B) described below with reference to FIG. 4B.

If conductive plate 1210 is not contacted by the external power charging terminals, relay switches 1410-SW1 and 1410-SW remain switched-off. That is, conductive plate 1210 is not coupled to either of power-supply terminals 1510 and 1520.

FIG. 4B is a diagram of exemplary conductive plate 1230, detector circuit 1330a, selection circuits 1430-1 and 1430-2, and detection and selection operations in exemplary apparatus 2000 in FIG. 2. As shown in FIG. 4B, conductive plate assembly 1200 (FIGs. 1A and 2) includes conductive plate 1230. Detector circuits 1300 (FIG. 2) include detector circuit 1330a. Conductive plate 1230 is coupled to detector circuit 1330a. Selection circuits 1400 include selection circuits 1430-1 and 1430-2 coupled to corresponding conductive plate 1230. Selection circuit 1430-1 is coupled between conductive plate 1230 and positive power-supply terminal 1510. Selection circuit 1430-2 is coupled between conductive plate 1230 and negative power-supply terminal 1520.

Detector circuit 1330a includes optocouplers 1330a-OC1 and 1330a-OC2 and a resistor 1330a-R. Optocoupler 1330a-OC1 includes an LED 1330a-D1 and a phototransistor 1330a-PT1. Optocoupler 1330a-OC2 includes LED 1330a-D2 and phototransistor 1330a-PT2. LEDs 1330a-D1 and 1330a-D2 and resistor 1330a-R are coupled to each other, to conductive plate 1230, and to electrically common circuit point 800 in a similar manner as diodes 1330-D1 and 1330-D2 and resistor 1330-R coupled to each other, to conductive plate 1230, and to electrically common circuit point 800, as described above with reference to FIG. 3A. Specifically, as shown in FIG. 4B, a positive terminal of LED 1330a-D1 and a negative terminal of LED 1330a-D2 are coupled to corresponding conductive plate 1230. A negative terminal of LED 1330a-D1 and a positive terminal of LED 1330a-D2 are coupled to a first terminal of resistor 1330a-R. A second terminal of resistor 1330a-R is coupled to electrically common circuit point 800.

Phototransistors 1330a-PT1 and 1330a-PT2 include an NPN phototransistor and are coupled a positive-voltage supply Vcc and respectively coupled to selection circuit 1430-1 and 1430-2 in a similar manner as phototransistors 1310a-PT1 and 1310a-PT2 are coupled to the positive-voltage supply Vcc and respectively coupled to selection circuits 1410-1 and 1410-2, as described above with reference to FIG. 4A.

Selection circuit 1430-1 includes a relay switch 1430-SW1 and a driver circuit 1430-DR1. Relay switch 1430-SW1 is coupled between corresponding conductive plate 1230 and positive power-supply terminal 1510. Driver circuit 1430-DR1 is coupled between relay switch 1430-SW1 and phototransistor 1330a-PT1. Driver circuit 1430-DR1 includes an NPN BJT. The BJT of driver circuit 1430-DR1 is coupled to the positive-voltage supply Vcc, to phototransistor 1330a-PT1, relay switch 1430-SW1 in a similar manner as the BJT of driver circuit 1410-DR1 is coupled to the positive-voltage supply Vcc, to phototransistor 1310a-PT1, and to relay switch 1410-SW1, as described above with reference to FIG. 4A. Driver circuit 1430-DR1 is coupled to relay switch 1430-SW1 to provide a first switching signal to switch on relay switch 1430-SW1 to electrically connect corresponding conductive plate 1230 with positive power-supply terminal 1510 when phototransistor 1330a-PT1 receives light from LED 1330a-D1.

Selection circuit 1430-2 includes a relay switch 1430-SW2 and a driver circuit 1430-DR2. Relay switch 1430-SW2 is coupled between corresponding conductive plate 1230 and negative power-supply terminal 1520. Driver circuit 1430-DR2 is coupled between relay switch 1430-SW2 and phototransistor 1330a-PT2. Driver circuit 1430-DR2 includes an NPN BJT. The BJT of driver circuit 1430-DR2 is coupled to the positive-voltage supply Vcc, to phototransistor 1330a-PT2, and to relay switch 1430-SW2 in a similar manner as the BJT of driver circuit 1410-DR2 is coupled to the positive-voltage supply Vcc, to phototransistor 1310a-PT2, and to relay switch 1410-SW2, as described above with reference to FIG. 4A. Driver circuit 1430-DR2 is coupled to relay switch 1430-SW2 to provide a second switching signal to switch on relay switch 1430-SW2 to electrically connect corresponding conductive plate 1230 with negative power-supply terminal 1520 when phototransistor 1330a-PT2 receives light from LED 1330a-D2.

As described above, when UAV 1100 lands, or is put, on apparatus 2000 to receive charging power, the positive and negative power charging terminals at landing legs 1110 and 1120 contact conductive plates 1210 and 1230 at contact points P1 and P2, respectively. This is the same landing as described above with reference to FIG. 3A. Thus, LEDs 1330a-D1 and 1330a-D2 and resistor 1330a-R operate in a similar manner as diodes 1330-D1 and 1330-D2 and resistor 1330-R, as described above with reference to FIG. 3A, except that LED 1330a-D1 emits light to phototransistor 1330a-PT1 when LED 1330a-D1 is turned on, or LED 1330a-D2 emits light to phototransistor 1330aPT2 when LED 1330a-D2 is turned on.

Specifically, because the negative power charging terminal contacts conductive plate 1230, conductive plate 1230 has the negative voltage. When conductive plate 1230 has the negative voltage, LED 1330a-D2 is forward biased and turned on because the negative terminal of LED 1330a-D2 is coupled to conductive plate 1230. LED 1330a-D1 is reverse biased and turned off because the positive terminal of LED 1330a-D1 is coupled to conductive plate 1230.

As described above, when LED 1310a-D1 (FIG. 4A) of detector circuit 1310a (FIG. 4A) and LED 1330a-D2 (FIG. 4B) of detector circuit 1330a (FIG. 4B) are turned on, the conductive path is formed, starting from conductive plate 1210, sequentially via LED 1310a-D1, resistor 1310a-R, electrically common circuit point 800, resistor 1330a-R, and LED 1330a-D2, to conductive plate 1230. Because conductive plates 1210 and 1230 have positive and negative voltages, respectively, the current flows from conductive plate 1210, via the conductive path, to conductive plate 1230. The current flows through LED 1330a-D2 as a current 1330a-i2 and through resistor 1330a-R as a current 1330a-i4, as shown in FIG. 4B.

When LED 1330a-D2 is turned on (i.e., current 1330a-i2 flows through LED 1330a-D2), LED 1330a-D2 is configured to emit light to phototransistor 1330a-PT2. When phototransistor 1330a-PT2 receives the light from LED 1330a-D2, phototransistor 1330a-PT2 is configured to transmit a detection signal, e.g., a current 932 (FIG. 4B), to driver circuit 1430-DR2 of selection circuit 1430-2. After driver circuit 1430-DR2 receives the detection signal (current 932), driver circuit 1430-DR2 is configured to drive and/or trigger, by a current 934 (FIG. 4B), relay switch 1430-SW2 to switch on to electrically connect conductive plate 1230 to negative power-supply terminal 1520.

At the same time, LED 1330a-D1 is turned off and does not emit light to phototransistor 1330a-PT1. That is, phototransistor 1330a-PT1 does not receive light from LED 1330a-D1 and does not transmit any signal to driver circuit 1430-DR1 of selection circuit 1430-1. Thus, relay switch 1430-SW1 remains switched-off. As a result, conductive plate 1230 is not electrically connected to positive power-supply terminal 1510. That is, selection circuits 1430-1 and 1430-2 together are configured to electrically connect conductive plate 1230 to negative power-supply terminal 1520 when the negative power charging terminal at landing leg 1120 contacts conductive plate 1230.

If instead of the negative power charging terminal, the positive power charging terminal at landing leg 1110 contacts conductive plates 1230, LED 1330a-D1, phototransistor 1330a-PT1, driver circuit 1430-DR1, and relay switch 1430-SW1 are configured to operate as LED 1310a-D1, phototransistor 1310a-PT1, driver circuit 1410-DR1, and relay switch 1410-SW1 (FIG. 4A) described above with reference to FIG. 4A.

If conductive plate 1230 is not contacted by the external power charging terminals, relay switches 1430-SW1 and 1430-SW remain switched-off. That is, conductive plate 1230 is not coupled to either of power-supply terminals 1510 and 1520.

In the apparatus for providing charging power, the detector circuits are configured to wirelessly control the selection circuits to electrically connect two of the conductive plates to the pair of power-supply terminals. For example, as described above with reference to FIG. 4A, detector circuit 1310a is configured to wirelessly control selection circuit 1410-1 by light emission from LED 1310a-D1 to phototransistor 1310a-PT1 to electrically connect conductive plate 1210 to positive power-supply terminal 1510. In addition, as described above with reference to FIG. 4B, detector circuit 1330a is configured to wirelessly control selection circuit 1430-2 by light emission from LED 1330a-D2 to phototransistor 1330a-PT2 to electrically connect conductive plate 1230 to negative power-supply terminal 1520.

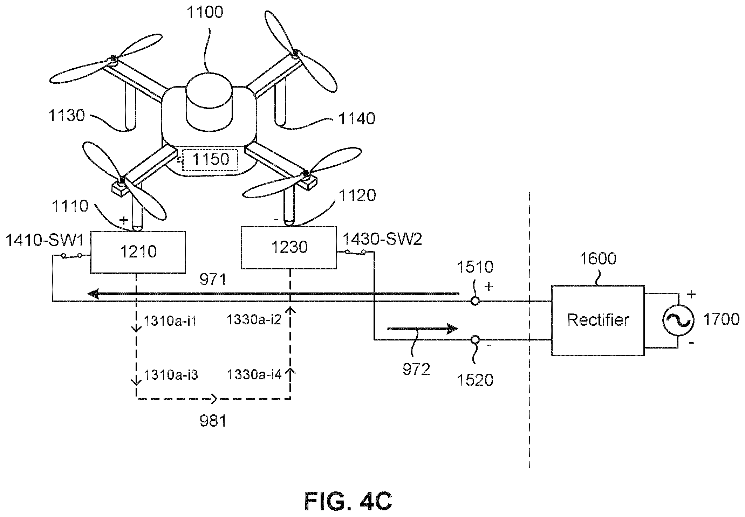

FIG. 4C is a diagram of an exemplary equivalent circuit connection between exemplary UAV 1100 in FIG. 1A and exemplary apparatus 2000 in FIG. 2. As shown in FIG. 4C, UAV 1100 includes a battery 1150. A positive terminal of battery 1150 electrically connects to the positive power charging terminal at landing leg 1110. A negative terminal of battery 1150 electrically connects to the negative power charging terminal at landing leg 1120. When UAV 1100 lands, or is put, on apparatus 2000 to receive charging power, the positive and negative power charging terminals at landing legs 1110 and 1120 contact conductive plates 1210 and 1230, respectively. This is the same landing as described above with reference to FIGs. 4A and 4B, or to FIG. 3A. Thus, conductive plates 1210 and 1230 have the positive and negative voltages, respectively, as described above with reference to FIGs. 4A and 4B, or to FIG. 3A.

As described above with reference to FIGs. 3A, 4A, and 4B and as shown in FIG. 4C, a first conductive path (a dashed-line path) is formed from conductive plate 1210 having the positive voltage to conductive plate 1230 having the negative voltage. Along the first conductive path, a first current flows from conductive plate 1210 to conductive plate 1230 as currents 1310a-i1 (FIG. 4A), 1310a-i3 (FIG. 4A), 981 (FIG. 3A), 1330a-i4 (FIG. 4B), and 1330a-i2 (FIG. 4B) sequentially.

Further, as described above with reference to FIGs. 4A and 4B and as shown in FIG. 4C, relay switch 1410-SW1 is configured to electrically connect conductive plate 1210 to positive power-supply terminal 1510. Relay switch 1430-SW2 is configured to electrically connect conductive plate 1230 to negative power-supply terminal 1520. Thus, a second conductive path (a solid-line path) is formed from rectifier 1600 and power source 1700, to positive power-supply terminal 1510, to conductive plate 1210, to battery 1150, to conductive plate 1230, to negative power-supply terminal 1520. Along the second conductive path, a second current flows from positive power-supply terminal 1510 to conductive plate 1210 as a current 971 (FIG. 4C), to the positive power charging terminal at the landing leg 1110, to battery 1150 of UAV 1100, to the negative power charging terminal at the landing leg 1120, to conductive plate 1230, and to negative power-supply terminal 1520 as a current 972 (FIG. 4C), sequentially. The second current is sourced from rectifier 1600 and power source 1700, which provide a higher voltage at power supply terminal 1510 than the voltage of battery 1150. Thus, the second current provides charging power to battery 1150 of UAV 1100. Accordingly, when UAV 1100 lands, or is put, on conductive plate assembly 1200 of apparatus 2000, battery 1150 of UAV 1100 is charged using the second current supplied by power source 1700.

In the apparatus for providing charging power, the detector circuits include current sensors to sense whether currents flow through two or more of the detector circuits when the external power charging terminals contact two or more conductive plates.

In some embodiments not covered by the claimed invention, FIG. 5A is a diagram of exemplary conductive plate 1210, a detector circuit 1310b, above-described selection circuits 1410-1 and 1410-2, and detection and selection operations in exemplary apparatus 2000 in FIG. 2. As shown in FIG. 5A, conductive plate assembly 1200 (FIG. 2) includes conductive plate 1210. Detector circuits 1300 (FIG. 2) include detector circuit 1310b. Conductive plate 1210 is coupled to detector circuit 1310b. Selection circuits 1400 include selection circuits 1410-1 and 1410-2 coupled to corresponding conductive plate 1210. Selection circuit 1410-1 is coupled between conductive plate 1210 and positive power-supply terminal 1510. Selection circuit 1410-2 is coupled between conductive plate 1210 and negative power-supply terminal 1520.

Detector circuit 1310b includes current sensors 1310b-CS1 and 1310b-CS2 and a resistor 1310b-R. Current sensors 1310b-CS1 and 1310b-CS2 each include a current input terminal I_{IN}, a current output terminal I_{OUT}, a ground terminal GND, and a sensing output terminal S_{OUT}. The current input terminal (I_{IN}) of current sensor 1310b-CS1 and the current output terminal (I_{OUT}) of current sensor 1310b-CS2 are coupled to corresponding conductive plate 1210. The current output terminal (I_{OUT}) of current sensor 1310b-CS1 and the current input terminal (I_{IN}) of current sensor 1310b-CS2 are coupled to a first terminal of resistor 1310b-R. A second terminal of resistor 1310b-R is coupled to electrically common circuit point 800. The sensing output terminal (S_{OUT}) of current sensor 1310b-CS1 is coupled to selection circuit 1410-1. The sensing output terminal (S_{OUT}) of current sensor 1310b-CS2 is coupled to selection circuit 1410-2. The ground terminals GND of current sensors 1310b-CS1 and 1310b-CS2 are coupled to ground.

Selection circuit 1410-1 includes relay switch 1410-SW1 and driver circuit 1410-DR1. Relay switch 1410-SW1 is coupled between corresponding conductive plate 1210 and positive power-supply terminal 1510. Driver circuit 1410-DR1 is coupled between relay switch 1410-SW1 and current sensor 1310b-CS1. Driver circuit 1410-DR1 includes the NPN BJT and is coupled to the positive-voltage supply Vcc and to relay switch 1410-SW1, as shown in FIG. 5A and as described above with reference to FIG. 4A. The base terminal of the BJT of driver circuit 1410-DR1 (FIG. 5A) is coupled to the sensing output terminal (S_{OUT}) of current sensor 1310b-CS1. Driver circuit 1410-DR1 is coupled to relay switch 1410-SW1 to provide a first switching signal to switch on relay switch 1410-SW1 to electrically connect corresponding conductive plate 1210 with positive power-supply terminal 1510 in response to receiving a first detection signal (e.g., a sensing signal or a current 915) from the sensing output terminal (S_{OUT}) of current sensor 1310b-CS1.

Selection circuit 1410-2 includes relay switch 1410-SW2 and driver circuit 1410-DR2. Relay switch 1410-SW2 is coupled between corresponding conductive plate 1210 and negative power-supply terminal 1520. Driver circuit 1410-DR2 is coupled between relay switch 1410-SW2 and current sensor 1310b-CS2. Driver circuit 1410-DR2 includes the NPN BJT and is coupled to the positive-voltage supply Vcc and to relay switch 1410-SW2, as shown in FIG. 5A and as described above with reference to FIG 4A. The base terminal of the BJT of driver circuit 1410-DR2 (FIG. 5A) is coupled to the sensing output terminal (S_{OUT}) of current sensor 1310b-CS2. Driver circuit 1410-DR2 is coupled to relay switch 1410-SW2 to provide a second switching signal to switch on relay switch 1410-SW2 to electrically connect corresponding conductive plate 1210 with negative power-supply terminal 1520 in response to receiving a second detection signal (e.g., a sensing signal or a current) from the sensing output terminal (S_{OUT}) of current sensor 1310b-CS2.

When UAV 1100 lands, or is put, on apparatus 2000 to receive charging power, the positive and negative power charging terminals at landing legs 1110 and 1120 contact, for example, conductive plates 1210 and 1230 at contact points P1 and P2, respectively, as shown in FIGs. 5A and 5B. This is the same landing as described above with reference to FIGs. 4A and 4B or to FIG. 3A.

The positive power charging terminal at landing leg 1110 has the positive voltage sourced from the battery of UAV 1100. Because the positive power charging terminal contacts conductive plate 1210, conductive plate 1210 has the same positive voltage. When conductive plate 1210 has the positive voltage, a current 1310b-i1 flows into the current input terminal (I_{IN}) of current sensor 1310b-CS1 and flows out from the current output terminal (I_{OUT}) of current sensor 1310b-CS1. Current sensor 1310b-CS1 is configured to sense current 1310b-i1 and transmits a first sensing signal (e.g., current 915 in FIG. 5A) from the sensing output terminal (S_{OUT}) to selection circuit 1410-1. Because the current output terminal (I_{OUT}) of current sensor 1310b-CS2 is coupled to conductive plate 1210 that has the positive voltage, no current flows through current sensor 1310b-CS2. As a result, current sensor 1310b-CS2 does not generate a sensing signal at its sensing output terminal (S_{OUT}).

When current sensor 1310b-CS1 (FIG. 5A) and a current sensor 1330b-CS2 (FIG. 5B) have currents that flow therethrough, a conductive path is formed, starting from conductive plate 1210, sequentially via current sensor 1310b-CS1, resistor 1310b-R, electrically common circuit point 800, a resistor 1330b-R (FIG. 5B), and current sensor 1330b-CS2, to conductive plate 1230. Because conductive plates 1210 and 1230 have positive and negative voltages, respectively, a current flows from conductive plate 1210, via the conductive path, to conductive plate 1230. The current flows through current sensor 1310b-CS1 as current 1310b-i1 and through resistor 1310b-R as a current 1310b-i3, as shown in FIG. 5A.

When current sensor 1310b-CS1 senses current 1310b-i1, current sensor 1310b-CS1 transmits a first detection signal (e.g., current 915 in FIG. 5A) from its sensing output (S_{OUT}) to driver circuit 1410-DR1 of selection circuit 1410-1. In response to receiving the first detection signal (current 915), driver circuit 1410-DR1 is configured to drive and/or trigger, by a current 917 (FIG. 5A), relay switch 1410-SW1 to switch on to electrically connect conductive plate 1210 to positive power-supply terminal 1510.

At the same time, current sensor 1310b-CS2 does not sense any current and does not generate a sensing signal at its sensing output terminal (S_{OUT}). Thus, relay switch 1410-SW2 remains switched-off. As a result, conductive plate 1210 is not electrically connected to negative power-supply terminal 1520. That is, selection circuits 1410-1 and 1410-2 together are configured to electrically connect conductive plate 1210 to positive power-supply terminal 1510 when the positive power charging terminal at landing leg 1110 contacts conductive plate 1210.

If instead of the positive power charging terminal, the negative power charging terminal at landing leg 1120 contacts conductive plates 1210, current sensor 1310b-CS2, driver circuit 1410-DR2, and relay switch 1410-SW2 (FIG. 5A) are configured to operate as a current sensor 1330b-CS2, driver circuit 1430-DR2, and relay switch 1430-SW2 (FIG. 5B) described below with reference to FIG. 5B.

FIG. 5B is a diagram of exemplary conductive plate 1230, detector circuit 1330b, above-described selection circuits 1430-1 and 1430-2, and detection and selection operations in exemplary apparatus 2000 in FIG. 2. As shown in FIG. 5B, conductive plate assembly 1200 (FIGs. 1A and 2) includes conductive plate 1230. Detector circuits 1300 (FIG. 2) include detector circuit 1330b. Conductive plate 1230 is coupled to detector circuit 1330b. Selection circuits 1400 include selection circuits 1430-1 and 1430-2 coupled to corresponding conductive plate 1230. Selection circuit 1430-1 is coupled between conductive plate 1230 and positive power-supply terminal 1510. Selection circuit 1430-2 is coupled between conductive plate 1230 and negative power-supply terminal 1520.

Detector circuit 1330b includes current sensors 1330b-CS1 and 1330b-CS2 and a resistor 1330b-R. Current sensors 1330b-CS1 and 1330b-CS2 each include a current input terminal I_{IN}, a current output terminal I_{OUT}, a ground terminal GND, and a sensing output terminal S_{OUT}. The current input terminal (I_{IN}) of current sensor 1330b-CS1 and the current output terminal (I_{OUT}) of current sensor 1330b-CS2 are coupled to corresponding conductive plate 1230. The current output terminal (I_{OUT}) of current sensor 1330b-CS1 and the current input terminal (I_{IN}) of current sensor 1330b-CS2 are coupled to a first terminal of resistor 1330b-R. A second terminal of resistor 1330b-R is coupled to electrically common circuit point 800. The sensing output terminal (S_{OUT}) of current sensor 1330b-CS1 is coupled to selection circuit 1430-1. The sensing output terminal (S_{OUT}) of current sensor 1330b-CS2 is coupled to selection circuit 1430-2. The ground terminals GND of current sensors 1330b-CS1 and 1330b-CS2 are coupled to ground.

Selection circuit 1430-1 includes relay switch 1430-SW1 and driver circuit 1430-DR1. Relay switch 1430-SW1 is coupled between corresponding conductive plate 1230 and positive power-supply terminal 1510. Driver circuit 1430-DR1 is coupled between relay switch 1430-SW1 and current sensor 1330b-CS1. Driver circuit 1430-DR1 includes the NPN BJT and is coupled to the positive-voltage supply Vcc and to relay switch 1430-SW1, as shown in FIG. 5B and as described above with reference to FIG. 4B. The base terminal of the BJT of driver circuit 1430-DR1 (FIG. 5B) is coupled to the sensing output terminal (S_{OUT}) of current sensor 1330b-CS1. Driver circuit 1430-DR1 is coupled to relay switch 1430-SW1 to provide a first switching signal to switch on relay switch 1430-SW1 to electrically connect corresponding conductive plate 1230 to positive power-supply terminal 1510 in response to receiving a first detection signal (e.g., a sensing signal or a current) from the sensing output terminal (S_{OUT}) of current sensor 1330b-CS1.

Selection circuit 1430-2 includes relay switch 1430-SW2 and driver circuit 1430-DR2. Relay switch 1430-SW2 is coupled between corresponding conductive plate 1230 and negative power-supply terminal 1520. Driver circuit 1430-DR2 is coupled between relay switch 1430-SW2 and current sensor 1330b-CS2. Driver circuit 1430-DR2 includes the NPN BJT and is coupled to the positive-voltage supply Vcc and to relay switch 1430-SW2, as shown in FIG. 5B and as described above with reference to FIG 4B. The base terminal of the BJT of driver circuit 1430-DR2 (FIG. 5B) is coupled to the sensing output terminal (S_{OUT}) of current sensor 1330b-CS2. Driver circuit 1430-DR2 is coupled to relay switch 1430-SW2 to provide a second switching signal to switch on relay switch 1430-SW2 to electrically connect corresponding conductive plate 1230 to negative power-supply terminal 1520 in response to receiving a second detection signal (e.g., a sensing signal or a current 936 (FIG. 5B)) from the sensing output terminal (S_{OUT}) of current sensor 1330b-CS2.

As described above, when UAV 1100 lands, or is put, on apparatus 2000 to receive charging power, the positive and negative power charging terminals at landing legs 1110 and 1120 contact conductive plates 1210 and 1230 at contact points P1 and P2, respectively, as shown in FIGs. 5A and 5B. This is the same landing as described above with reference to FIGs. 4A and 4B or to FIG. 3A.

The negative power charging terminal at landing leg 1120 has the negative voltage sourced from the battery of UAV 1100. Because the negative power charging terminal contacts conductive plate 1230, conductive plate 1230 has the negative voltage. When conductive plate 1230 has the negative voltage, a current 1330b-i2 flows into the current input terminal (I_{IN}) of current sensor 1330b-CS2 and flows out from the current output terminal (I_{OUT}) of current sensor 1330b-CS2 to conductive plate 1230. Current sensor 1330b-CS2 is configured to sense current 1330b-i2 and transmits a second sensing signal (i.e., current 936 in FIG. 5B) from its sensing output (S_{OUT}) to selection circuit 1430-2. Because the current input terminal (I_{IN}) of current sensor 1330b-CS1 is coupled to conductive plate 1230 that has the negative voltage, no current flows through current sensor 1330b-CS1. As a result, current sensor 1330b-CS1 does not generate a sensing signal at its sensing output terminal (S_{OUT}).

As described above, when current sensor 1310b-CS1 (FIG. 5A) and current sensor 1330b-CS2 (FIG. 5B) have currents that flow therethrough, the conductive path is formed, starting from conductive plate 1210, sequentially via current sensor 1310b-CS1, resistor 1310b-R, electrically common circuit point 800, resistor 1330b-R (FIG. 5B), and current sensor 1330b-CS2, to conductive plate 1230. Because conductive plates 1210 and 1230 have positive and negative voltages, respectively, the current flows from conductive plate 1210, via the conductive path, to conductive plate 1230. The current flows through current sensor 1330b-CS2 as a current 1330b-i2 and through resistor 1330a-R as a current 1330b-i4, as shown in FIG. 5B.

When current sensor 1330b-CS2 senses current 1330b-i2, current sensor 1330b-CS2 transmits the second detection signal (e.g., current 936 (FIG. 5B)) from its sensing output terminal (S_{OUT}) to driver circuit 1430-DR2 of selection circuit 1430-2. In response to receiving the second detection signal (current 936), driver circuit 1430-DR2 is configured to drive and/or trigger, by a current 938 (FIG. 5B), relay switch 1430-SW2 to switch on to electrically connect conductive plate 1230 to negative power-supply terminal 1520.

At the same time, current sensor 1330b-CS1 does not sense any current and does not generate any sensing signal at its sensing output terminal (S_{OUT}). Thus, relay switch 1430-SW1 remains switched-off. As a result, conductive plate 1230 is not electrically connected to positive power-supply terminal 1510. That is, selection circuits 1410-1 and 1410-2 together are configured to electrically connect conductive plate 1230 to negative power-supply terminal 1520 when the negative power charging terminal at landing leg 1120 contacts conductive plate 1230.

If instead of the negative power charging terminal, the positive power charging terminal at landing leg 1110 contacts conductive plates 1230, current sensor 1330b-CS1, driver circuit 1430-DR1, and relay switch 1430-SW1 (FIG. 5B) are configured to operate as current sensor 1310b-CS1, driver circuit 1410-DR1, and relay switch 1410-SW1 (FIG. 5A) described above with reference to FIG. 5A.

Accordingly, when UAV 1100 lands, or is put, on apparatus 2000 that has detector circuits as described above with reference to FIGs. 5A and 5B, the same equivalent circuit connection between UAV 1100 (FIG. 1A) and apparatus 2000 (FIG. 2) is formed as shown in and described above with reference to FIG. 4C. Battery 1150 of UAV 1100 is charged by power source 1700.

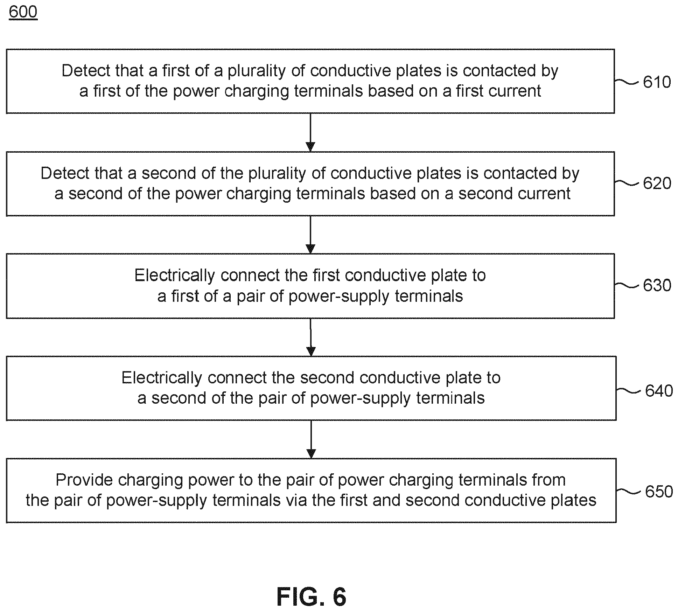

FIG. 6 is a flow chart of an exemplary method 600 for providing charging power, according to the claimed invention. Method 600 may be practiced by apparatus and devices disclosed and illustrated in the present disclosure for providing charging power to a pair of power charging terminals that are coupled to a power storage device. Method 600 includes detecting that a first of a plurality of conductive plates is contacted by a first of the power charging terminals based on a first current (step 610), detecting that a second of the plurality of conductive plates is contacted by a second of the power charging terminals based on a second current (step 620), electrically connecting the first conductive plate to a first of a pair of power-supply terminals (step 630), electrically connecting the second conductive plate to a second of the pair of power-supply terminals (step 640), and providing charging power to the pair of power charging terminals from the pair of power-supply terminals via the first and second conductive plates (step 650).

Step 610 includes detecting that a first of a plurality of conductive plates is contacted by a first of the power charging terminals based on a first current. For example, as described above with reference to FIG. 3A, detector circuits 1300 of apparatus 2000 are configured to detect that conductive plate 1210 of the plurality of conductive plates of conductive plate assembly 1200 is contacted by the positive power charging terminal at landing leg 1110 based on current 1310-i1 (FIG. 3A).

As another example, as described above with reference to FIG. 4A or 5A, detector circuits 1300 are configured to detect that conductive plate 1210 of the plurality of conductive plates of conductive plate assembly 1200 is contacted by the positive power charging terminal at landing leg 1110 based on current 1310a-i1 (FIG. 4A) or 1310b-i1 (FIG. 5A).

Step 620 includes detecting that a second of the plurality of conductive plates is contacted by a second of the power charging terminals based on a second current. For example, as described above with reference to FIG. 3A, detector circuits 1300 of apparatus 2000 are configured to detect that conductive plate 1230 of the plurality of conductive plates of conductive plate assembly 1200 is contacted by the negative power charging terminal at landing leg 1120 based on current 1330-i2 (FIG. 3A).

Current 1330-i2 is sourced from current 1310-i1 via resistor 1310-R, electrically common circuit point 800, and resistor 1330-R, as shown in FIG. 3A. Specifically, current 1310-i1 flows outwards from conductive plate 1210, via diode 1310-D1, to resistor 1310-R. Current 1330-i2 flows towards conductive plate 1230 from resistor 1330-R, via diode 1330-D2, as described above with reference to FIG. 3A.

As another example, as described above with reference to FIG. 4B or 5B, detector circuits 1300 are configured to detect that conductive plate 1230 of the plurality of conductive plates of conductive plate assembly 1200 is contacted by the negative power charging terminal at landing leg 1120 based on current 1330a-i2 (FIG. 4B) or 1330b-i2 (FIG. 5B).

Current 1330a-i2 (FIG. 4B) or 1330b-i2 (FIG. 5B) is sourced from current 1310a-i1 (FIG. 4A) or 1310b-i1 (FIG. 5A) via resistor 1310a-R (FIG. 4A) or 1310b-R (FIG. 5A), electrically common circuit point 800, and resistor 1330a-R (FIG. 4B) or 1330b-R (FIG. 5B), as shown in FIGs. 4A and 4B, or 5A and 5B. Specifically, current 1310a-i1 (FIG. 4A) or 1310b-i1 (FIG. 5A) flows outwards from conductive plate 1210, via LED 1310a-D1 (FIG. 4A) or current sensor 1310b-CS1 (FIG. 5A), to resistor 1310a-R (FIG. 4A) or 1310b-R (FIG. 5A). Current 1330a-i2 (FIG. 4B) or 1330bi2 (FIG. 5B) flows towards conductive plate 1230 from resistor 1330a-R (FIG. 4B) or 1330b-R (FIG. 5B), via LED 1330a-D2 (FIG. 4B) or current sensor 1330b-CS2 (FIG. 5B), as described above with reference to FIGs. 4A and 4B, or 5A and 5B.

Step 630 includes electrically connecting the first conductive plate to a first of a pair of power-supply terminals. For example, as described above with reference to FIG. 4A, selection circuits 1400 of apparatus 2000 are configured to electrically connect conductive plate 1210 to positive power-supply terminal 1510 when selection circuit 1410-1 receives a detection signal, e.g., current 911, from detector circuit 1310a. As another example, as described above with reference to FIG. 5A, selection circuits 1400 of apparatus 2000 are configured to electrically connect conductive plate 1210 to positive power-supply terminal 1510 when selection circuit 1410-1 receives a detection signal, e.g., current 915, from detector circuit 1310b.

Step 640 includes electrically connecting the second conductive plate to a second of the pair of power-supply terminals. For example, as described above with reference to FIG. 4B, selection circuits 1400 of apparatus 2000 are configured to electrically connect conductive plate 1230 to negative power-supply terminal 1520 when selection circuit 1430-2 receives a detection signal, e.g., current 932, from detector circuit 1330a. As another example, as described above with reference to FIG. 5B, selection circuits 1400 of apparatus 2000 are configured to electrically connect conductive plate 1230 to negative power-supply terminal 1520 when selection circuit 1430-2 receives a detection signal, e.g., current 936, from detector circuit 1330b.

Step 650 includes providing charging power to the pair of power charging terminals from the pair of power-supply terminals via the first and second conductive plates. For example, as described above with reference to FIG. 4C, apparatus 2000 is configured to provide charging power to the pair of external power charging terminals at landing legs 1110 and 1120 of UAV 1100 from the pair of power-supply terminals 1510 and 1520 via conductive plates 1210 and 1230. Current 971 (FIG. 4C) is a charging current to battery 1150 of UAV 1100.

Providing charging power to the pair of power charging terminals of step 650 includes providing charging power to the pair of power charging terminals via a third current. The third current is different from the first current of step 610 and the second current of step 620. For example, as described above with reference to FIG. 4A, the first current of step 610 is current 1310a-i1 (FIG. 4A). As described above with reference to FIG. 4B, the second current of step 620 is current 1330a-i2 (FIG. 4B). As described above with reference to FIG. 4C, apparatus 2000 is configured to provide charging power to the pair of external power charging terminals at landing legs 1110 and 1120 via current 971 (FIG. 4C). Current 971 is different from currents 1310a-i1 and 1330a-i2.

In some embodiments, a method for providing charging power may include the steps of method 600 and further include detecting that a third of the plurality of conductive plates is contacted by the first power charging terminal based on a third current and electrically connecting the third conductive plate with the first power-supply terminal. Providing charging power to the pair of power charging terminals of step 650 may include providing charging power to the pair of power charging terminals from the pair of power-supply terminals via the first, second, and third conductive plates.

For example, as described above with reference to FIG. 3B, detector circuits 1300 of apparatus 2000 are configured to detect that conductive plates 1212 and 1242 are contacted by the positive and negative power charging terminals based on currents 1312-i1 (the first current of step 610) and 1342-i2 (the second current of step 620), respectively. Detector circuits 1300 of apparatus 2000 are also configured to detect that conductive plate 1222 of the plurality of conductive plates of conductive plate assembly 1200 is also contacted by the positive power charging terminal at landing leg 1110 based on current 1322-i1 (FIG. 3B). Selection circuits 1400 of apparatus 2000 are configured to electrically connect conductive plate 1222 with positive power-supply terminal 1510 when a selection circuit corresponding to detector circuit 1322 receives a detection signal from detector circuit 1322, similar to conductive plate 1212 as described above with reference to FIG. 3B. Because the positive power charging terminal contacts conductive plates 1212 and 1222 and the negative power charging terminal contacts conductive plate 1242, apparatus 2000 is configured to provide charging power to the power charging terminals from the pair of power-supply terminals 1510 and 1520 via conductive plates 1212, 1222, and 1242.

As described above with reference to FIG. 3B, current 1322-i1 flows outwards from conductive plate 1222. Current 1342-i2 is sourced from currents 1312-i1 and 1322-i1.

As another example, as described above with reference to FIG. 3C, detector circuits 1300 of apparatus 2000 are configured to detect that conductive plates 1210 and 1212 are contacted by the positive and negative power charging terminals based on currents 1310-i1 (the first current of step 610) and 1312-i2 (the second current of step 620), respectively. Detector circuits 1300 of apparatus 2000 are also configured to detect that conductive plate 1222 of the plurality of conductive plates of conductive plate assembly 1200 is contacted by the negative power charging terminal at landing leg 1120 based on current 1322-i2 (FIG. 3C). Selection circuits 1400 of apparatus 2000 are configured to electrically connect conductive plate 1222 with negative power-supply terminal 1520 when a selection circuit corresponding to detector circuit 1322 receives a detection signal from detector circuit 1322, similar to conductive plate 1212 as described above with reference to FIG. 3C. Because the positive power charging terminal contacts conductive plate 1210 and the negative power charging terminal contacts conductive plates 1212 and 1222, apparatus 2000 is configured to provide charging power to the power charging terminals from the pair of power-supply terminals 1510 and 1520 via conductive plates 1210, 1212, and 1222.

As described above with reference to FIG. 3C, current 1322-i2 flows towards conductive plate 1222. Currents 1312-i2 and 1322-i2 are sourced from current 1310-i1.

In some embodiments, a method for providing charging power may include the steps of method 600 and further include generating a first detection signal based on the first current and generating a second detection signal based on the second current. Electrically connecting the first conductive plate with the first of the pair of power-supply terminals of step 630 includes selecting the first power-supply terminal based on the first detection signal. Electrically connecting the second conductive plate with the second of the pair of power-supply terminals of step 640 includes selecting the second power-supply terminal based on the second detection signal.

For example, as described above with reference to FIG. 4A, optocoupler 1310a-OC1 is configured to generate a first detection signal (current 911) based on current 1310a-11. Specifically, LED 1310a-D1 of optocoupler 1310a-OC1 is configured to emit light based on current 1310a-i1. Phototransistor 1310a-PT1 is configured to receive the light from LED 1310a-D1 to generate the first detection signal (current 911). Selection circuits 1400 are configured to select positive power-supply terminal 1510 to be electrically connected to conductive plate 1210 based on the first detection signal (current 911). Specifically, selection circuit 1410-1 is configured to electrically connect positive power-supply terminal 1510 to conductive plate 1210 while selection circuit 1410-2 does not electrically connect to negative power-supply terminal 1520 to conductive plate 1210, as described above with reference to FIG. 4A.

In addition, as described above with reference to FIG. 4B, optocoupler 1330a-OC2 is configured to generate a second detection signal (current 932) based on current 1330a-i2. Specifically, LED 1330a-D2 of optocoupler 1330a-OC2 is configured to emit light based on current 1330a-i2. Phototransistor 1330a-PT2 is configured to receive the light from LED 1330a-D2 to generate the second detection signal (current 932). Selection circuits 1400 are configured to select negative power-supply terminal 1520 to be electrically connected to conductive plate 1230 based on the second detection signal (current 932). Specifically, selection circuit 1430-2 is configured to electrically connect negative power-supply terminal 1520 to conductive plate 1230 while selection circuit 1430-1 does not electrically connect to positive power-supply terminal 1510 to conductive plate 1230, as described above with reference to FIG. 4B.

A method for providing charging power may include a plurality of operations of apparatus 2000 described above with reference to FIGs. 1A-1D, 2, and 3A-3C.

Another aspect of the disclosure is directed to a non-transitory computer-readable medium storing instructions which, when executed, cause one or more computers to perform the methods discussed above. The computer-readable medium may include volatile or non-volatile, magnetic, semiconductor, tape, optical, removable, non-removable, or other types of computer-readable medium or computer-readable storage devices. For example, the computer-readable medium may be the storage device or the memory module having the computer instructions stored thereon, as disclosed. In some embodiments, the computer-readable medium may be a disc or a flash drive having the computer instructions stored thereon.

## Claims

1. Apparatus for providing charging power to a pair of external power charging terminals that are coupled to a power storage device of an external device, the pair of external power charging terminals being spaced apart by a predetermined distance, the apparatus comprising:
a conductive plate assembly (1200) including a plurality of conductive plates (1210, 1220, 1230, 1240), each of the conductive plates (1210, 1220, 1230, 1240) having a surface, the surface having a maximum surface length less than the predetermined distance, the maximum surface length being greater than or equal to a length between any two points on the surface of the conductive plate (1210, 1220, 1230, 1240);
a plurality of detector circuits (1300) respectively coupled to corresponding ones of the plurality of conductive plates (1210, 1220, 1230, 1240), each of the detector circuits (1300) configured to be responsive to a voltage on one of the external power charging terminals to provide a detection signal when the corresponding conductive plate contacts the one of the external power charging terminals; and
a plurality of selection circuits (1400) respectively coupled to corresponding ones of the plurality of conductive plates (1210, 1220, 1230, 1240) and including a pair of power-supply terminals (1510, 1520) for receiving a power supply voltage, each of the selection circuits (1400) further coupled to receive the detection signal from a corresponding one of the detector circuits (1300) and configured to electrically connect the corresponding conductive plate to one of the power-supply terminals (1510, 1520) in response to receiving the detection signal,
wherein the plurality of detector circuits (1300) are coupled to an electrically common circuit point (800);
wherein each of the detector circuits (1310, 1320, 1330, 1340) comprises first diodes (1310-D1, 1320-D1, 1330-D1, 1340-D1) and second diodes (1310-D2, 1320-D2, 1330-D2, 1340-D2) coupled in parallel and a resistor(1310-R, 1320-R, 1330-R, 1340-R), wherein:
a positive terminal of the first diode (1310-D1, 1320-D1, 1330-D1, 1340-D1) and a negative terminal of the second diode (1310-D2, 1320-D2, 1330-D2, 1340-D2) are coupled to the corresponding conductive plate (1210, 1220, 1230, 1240);
a negative terminal of the first diode (1310-D1, 1320-D1, 1330-D1, 1340-D1) and a positive terminal of the second diode (1310-D2, 1320-D2, 1330-D2, 1340-D2) are coupled to the resistor (1310-R, 1320-R, 1330-R, 1340-R); and
the resistor (1310-R, 1320-R, 1330-R, 1340-R) is coupled to the electrically common circuit point (800).

2. The apparatus of claim 1, wherein:
the plurality of conductive plates (1210, 1220, 1230, 1240) are arranged to be contiguous so that a top surface of the conductive plate assembly (1200) is substantially planar;
each of the conductive plates (1210, 1220, 1230, 1240) has length and width dimensions substantially the same as length and width dimensions of the other conductive plates (1210, 1220, 1230, 1240); and
each of the length and width dimensions of each of the conductive plates (1210, 1220, 1230, 1240) is less than the predetermined distance.

3. The apparatus of claim 1 or 2, wherein each of the selection circuits (1400) comprises:
a first switch circuit (1410-1) coupled between the corresponding conductive plate (1210) and a first of the power-supply terminals (1510, 1520);
a first driver circuit (1410-DR1) coupled to the first switch circuit (1410-1);
a second switch circuit (1410-2) coupled between the corresponding conductive plate (1210) and a second of the power-supply terminals (1510, 1520); and
a second driver circuit (1410-DR2) coupled to the second switch circuit (1410- DR2).

4. The apparatus of claim 3,
wherein:
the first switch circuit (1410-1) comprises a first relay switch (1410-SW1),
the first driver circuit (1410-DR1) is coupled to the first relay switch (1410- SW1) to provide a first switching signal to switch on the first relay switch (1410- SW1) when a first current flows through the first diode (1310-D1),
the second switch circuit (1410-2) comprises a second relay switch (1410- SW2), and
the second driver circuit (1410-DR2) is coupled to the second relay switch (1410-SW2) to provide a second switching signal to switch on the second relay switch when a second current flows through the second diode (1310-D2); or
wherein:
the detection signal comprises first and second detection signals,
the first switch circuit (1410-1) comprises a first relay switch (1410-SW1),
the first driver circuit (1410-DR1) is coupled to the first relay switch (1410- SW1) to provide a first switching signal to switch on the first relay switch (1410- SW1) in response to receiving the first detection signal,
the second switch circuit (1410-2) comprises a second relay switch (1410- SW2), and
the second driver circuit (1410-DR2) is coupled to the second relay switch (1410-SW2) to provide a second switching signal to switch on the second relay switch (1410-SW2) in response to receiving the second detection signal.

5. The apparatus of any of claims 1 to 4, wherein the detector circuits (1300) are configured to wirelessly control the selection circuits (1400) to electrically connect two of the conductive plates (1210, 1220, 1230, 1240) to the pair of power-supply terminals (1510, 1520).

6. A method for providing charging power, using the apparatus of any of claims 1 to 5, to a pair of power charging terminals that are coupled to a power storage device, the method comprising:
detecting, by a first detector circuit of the plurality of detector circuits (1300), that a first of a plurality of conductive plates (1210, 1220, 1230, 1240) is contacted by a first of the power charging terminals based on a first current;
detecting, by a second detector circuit of the plurality of detector circuits (1300), that a second of the plurality of conductive plates (1210, 1220, 1230, 1240) is contacted by a second of the power charging terminals based on a second current, wherein the second current is sourced from the first current, or the first current is sourced from the second current;
electrically connecting the first conductive plate to a first of a pair of power-supply terminals (1510, 1520) by a first selection circuit of the plurality of selection circuits (1400);
electrically connecting the second conductive plate to a second of the pair of power-supply terminals (1510, 1520) by a second selection circuit of the plurality of selection circuits (1400); and providing charging power to the pair of power charging terminals from the pair of power-supply terminals (1510, 1520) through first and second selection circuits, via the first and second conductive plates;
wherein the plurality of detector circuits (1300) are coupled to an electrically common circuit point (800);
wherein each of the detector circuits (1310, 1320, 1330, 1340) comprises first diodes (1310-D1, 1320-D1, 1330-D1, 1340-D1) and second diodes (1310-D2, 1320-D2, 1330-D2, 1340-D2) coupled in parallel and a resistor(1310-R, 1320-R, 1330-R, 1340-R), wherein:
a positive terminal of the first diode (1310-D1, 1320-D1, 1330-D1, 1340-D1) and a negative terminal of the second diode (1310-D2, 1320-D2, 1330-D2, 1340-D2) are coupled to the corresponding conductive plate (1210, 1220, 1230, 1240);
a negative terminal of the first diode (1310-D1, 1320-D1, 1330-D1, 1340-D1) and a positive terminal of the second diode (1310-D2, 1320-D2, 1330-D2, 1340-D2) are coupled to the resistor (1310-R, 1320-R, 1330-R, 1340-R); and
the resistor (1310-R, 1320-R, 1330-R, 1340-R) is coupled to the electrically common circuit point (800).

7. The method of claim 6, wherein:
when the second current is sourced from the first current,
the first current flows outwards from the first conductive plate, and
the second current flows towards the second conductive plate; or
when the first current is sourced from the second current,
the second current flows outwards from the second conductive plate, and
the first current flows towards the first conductive plate.

8. The method of claim 6 or 7, further comprising:
detecting that a third of the plurality of conductive plates (1210, 1220, 1230, 1240) is contacted by the first power charging terminal based on a third current; and
electrically connecting the third conductive plate with the first power-supply terminal;
wherein providing charging power to the pair of power charging terminals comprises:
providing charging power to the pair of power charging terminals from the pair of power-supply terminals (1510, 1520) via the first, second, and third conductive plates.

9. The method of claim 8,
wherein the third current flows outwards from the third conductive plate, and the second current is sourced from the first and third currents; or
wherein the third current flows towards the third conductive plate, and the second and third currents are sourced from the first current.

10. The method of any of claims 6 to 9, further comprising:
generating a first detection signal based on the first current; and
generating a second detection signal based on the second current;
wherein:
electrically connecting the first conductive plate with the first of the pair of power-supply terminals (1510, 1520) comprises selecting the first power-supply terminal based on the first detection signal, and
electrically connecting the second conductive plate with the second of the pair of power-supply terminals (1510, 1520) comprises selecting the second power-supply terminal based on the second detection signal;
optionally wherein:
generating the first detection signal comprises:
emitting first light based on the first current, and
receiving the first light to generate the first detection signal; and
generating the second detection signal comprises:
emitting second light based on the second current, and
receiving the second light to generate the second detection signal.

11. The method of any of claims 6 to 10, wherein providing charging power to the pair of power charging terminals further comprises providing charging power to the pair of power charging terminals via a third current, wherein the third current is different from the first and second currents.

## Patentansprüche

1. Vorrichtung zum Bereitstellen von Ladeleistung für ein Paar externer Stromladeanschlüsse, die mit einer Energiespeichervorrichtung eines externen Geräts verbunden sind, wobei das Paar externer Stromladeanschlüsse einen vorbestimmten Abstand voneinander aufweist, wobei die Vorrichtung aufweist:
eine leitfähige Platteneinheit (1200), die eine Mehrzahl von leitfähigen Platten (1210, 1220, 1230, 1240) aufweist, wobei jede der leitfähigen Platten (1210, 1220, 1230, 1240) eine Oberfläche aufweist, wobei die Oberfläche eine maximale Oberflächenlänge aufweist, die kleiner als der vorbestimmte Abstand ist, wobei die maximale Oberflächenlänge größer als oder gleich einer Länge zwischen zwei beliebigen Punkten der Oberfläche der leitfähigen Platte (1210, 1220, 1230, 1240) ist;
eine Mehrzahl von Detektionsschaltungen (1300), die jeweils mit der entsprechenden leitfähigen Platte aus der Mehrzahl von leitfähigen Platten (1210, 1220, 1230, 1240) verbunden sind, wobei jede der Detektionsschaltungen (1300) so konfiguriert ist, dass sie auf eine Spannung an einem der externen Stromladeanschlüsse reagiert, um ein Detektionssignal bereitzustellen, wenn die entsprechende leitfähige Platte den einen der externen Stromladeanschlüsse berührt; und
eine Mehrzahl von Auswahlschaltungen (1400), die jeweils mit der entsprechenden leitfähigen Platte aus der Mehrzahl von leitfähigen Platten (1210, 1220, 1230, 1240) verbunden sind und ein Paar Stromversorgungsanschlüsse (1510, 1520) zum Empfangen einer Versorgungsspannung aufweisen, wobei jede der Auswahlschaltungen (1400) ferner verbunden ist, um das Detektionssignal von der entsprechenden Detektionsschaltung (1300) zu empfangen, und konfiguriert ist, um die entsprechende leitfähige Platte als Reaktion auf den Empfang des Detektionssignals elektrisch mit einem der Stromversorgungsanschlüsse (1510, 1520) zu verbinden,
wobei die Mehrzahl von Detektionsschaltungen (1300) mit einem gemeinsamen elektrischen Schaltungspunkt (800) verbunden sind;
wobei jede der Detektionsschaltungen (1310, 1320, 1330, 1340) erste Dioden (1310-D1, 1320-D1, 1330-D1, 1340-D1) und zweite Dioden (1310-D2, 1320-D2, 1330-D2, 1340-D2), die parallel geschaltet sind, sowie einen Widerstand (1310-R, 1320-R, 1330-R, 1340-R) aufweist, wobei:
ein positiver Anschluss der ersten Diode (1310-D1, 1320-D1, 1330-D1, 1340-D1) und ein negativer Anschluss der zweiten Diode (1310-D2, 1320-D2, 1330-D2, 1340-D2) mit der entsprechenden leitfähigen Platte (1210, 1220, 1230, 1240) verbunden sind;
ein negativer Anschluss der ersten Diode (1310-D1, 1320-D1, 1330-D1, 1340-D1) und ein positiver Anschluss der zweiten Diode (1310-D2, 1320-D2, 1330-D2, 1340-D2) mit dem Widerstand (1310-R, 1320-R, 1330-R, 1340-R) verbunden sind; und
der Widerstand (1310-R, 1320-R, 1330-R, 1340-R) mit dem gemeinsamen elektrischen Schaltungspunkt (800) verbunden ist.

2. Vorrichtung nach Anspruch 1, wobei:
die Mehrzahl von leitfähigen Platten (1210, 1220, 1230, 1240) so angeordnet sind, dass sie aneinander angrenzen, sodass eine Oberseite der leitfähigen Platteneinheit (1200) im Wesentlichen eben ist;
jede der leitfähigen Platten (1210, 1220, 1230, 1240) Längen- und Breitenabmessungen aufweist, die im Wesentlichen gleich den Längen- und Breitenabmessungen der anderen leitfähigen Platten (1210, 1220, 1230, 1240) sind; und
jede der Längen- und Breitenabmessungen von jeder der leitfähigen Platten (1210, 1220, 1230, 1240) kleiner als der vorbestimmte Abstand ist.

3. Vorrichtung nach Anspruch 1 oder 2, wobei jede der Auswahlschaltungen (1400) aufweist:
eine erste Schalterschaltung (1410-1), die zwischen der entsprechenden leitfähigen Platte (1210) und einem ersten der Stromversorgungsanschlüsse (1510, 1520) verbunden ist;
eine erste Treiberschaltung (1410-DR1), die mit der ersten Schalterschaltung (1410-1) verbunden ist;
eine zweite Schalterschaltung (1410-2), die zwischen der entsprechenden leitfähigen Platte (1210) und einem zweiten der Stromversorgungsanschlüsse (1510, 1520) verbunden ist; und
eine zweite Treiberschaltung (1410-DR2), die mit der zweiten Schalterschaltung (1410-DR2) verbunden ist.

4. Vorrichtung nach Anspruch 3,
wobei:
die erste Schalterschaltung (1410-1) einen ersten Relaisschalter (1410-SW1) aufweist,
die erste Treiberschaltung (1410-DR1) mit dem ersten Relaisschalter (1410-SW1) verbunden ist, um ein erstes Schaltsignal zum Einschalten des ersten Relaisschalters (1410-SW1) bereitzustellen, wenn ein erster Strom durch die erste Diode (1310-D1) fließt,
die zweite Schalterschaltung (1410-2) einen zweiten Relaisschalter (1410-SW2) aufweist, und
die zweite Treiberschaltung (1410-DR2) mit dem zweiten Relaisschalter (1410-SW2) verbunden ist, um ein zweites Schaltsignal zum Einschalten des zweiten Relaisschalters bereitzustellen, wenn ein zweiter Strom durch die zweite Diode (1310-D2) fließt; oder
wobei:
das Detektionssignal ein erstes und ein zweites Detektionssignal aufweist,
die erste Schalterschaltung (1410-1) einen ersten Relaisschalter (1410-SW1) aufweist,
die erste Treiberschaltung (1410-DR1) mit dem ersten Relaisschalter (1410-SW1) verbunden ist, um ein erstes Schaltsignal zum Einschalten des ersten Relaisschalters (1410-SW1) als Reaktion auf den Empfang des ersten Detektionssignals bereitzustellen,
die zweite Schalterschaltung (1410-2) einen zweiten Relaisschalter (1410-SW2) aufweist, und
die zweite Treiberschaltung (1410-DR2) mit dem zweiten Relaisschalter (1410-SW2) verbunden ist, um ein zweites Schaltsignal zum Einschalten des zweiten Relaisschalters (1410-SW2) als Reaktion auf den Empfang des zweiten Detektionssignals bereitzustellen.

5. Vorrichtung nach einem der Ansprüche 1 bis 4, wobei die Detektionsschaltungen (1300) dazu konfiguriert sind, die Auswahlschaltungen (1400) drahtlos zu steuern, um zwei der leitfähigen Platten (1210, 1220, 1230, 1240) elektrisch mit dem Paar von Stromversorgungsanschlüssen (1510, 1520) zu verbinden.

6. Verfahren zum Bereitstellen von Ladeleistung unter Verwendung der Vorrichtung nach einem der Ansprüche 1 bis 5 für ein Paar von Stromladeanschlüssen, die mit einer Energiespeichervorrichtung verbunden sind, wobei das Verfahren aufweist:
Erfassen, durch eine erste Detektionsschaltung der Mehrzahl von Detektionsschaltungen (1300), dass eine erste aus einer Mehrzahl von leitfähigen Platten (1210, 1220, 1230, 1240) basierend auf einem ersten Strom von einem ersten der Stromladeanschlüsse berührt wird;
Erfassen, durch eine zweite Detektionsschaltung der Mehrzahl von Detektionsschaltungen (1300), dass eine zweite aus der Mehrzahl von leitfähigen Platten (1210, 1220, 1230, 1240) basierend auf einem zweiten Strom von einem zweiten der Stromladeanschlüsse berührt wird, wobei der zweite Strom aus dem ersten Strom abgeleitet ist oder der erste Strom aus dem zweiten Strom abgeleitet ist;
elektrisches Verbinden der ersten leitfähigen Platte mit einem ersten Anschluss eines Paars von Stromversorgungsanschlüssen (1510, 1520) durch eine erste Auswahlschaltung der Mehrzahl von Auswahlschaltungen (1400);
elektrisches Verbinden der zweiten leitfähigen Platte mit einem zweiten Anschluss des Paars von Stromversorgungsanschlüssen (1510, 1520) durch eine zweite Auswahlschaltung der Mehrzahl von Auswahlschaltungen (1400); und Bereitstellen von Ladeleistung für das Paar von Stromladeanschlüssen von dem Paar von Stromversorgungsanschlüssen (1510, 1520) durch die erste und die zweite Auswahlschaltung über die erste und die zweite leitfähige Platte;
wobei die Mehrzahl von Detektionsschaltungen (1300) mit einem gemeinsamen elektrischen Schaltungspunkt (800) verbunden sind;
wobei jede der Detektionsschaltungen (1310, 1320, 1330, 1340) erste Dioden (1310-D1, 1320-D1, 1330-D1, 1340-D1) und zweite Dioden (1310-D2, 1320-D2, 1330-D2, 1340-D2), die parallel geschaltet sind, sowie einen Widerstand (1310-R, 1320-R, 1330-R, 1340-R) aufweist, wobei:
ein positiver Anschluss der ersten Diode (1310-D1, 1320-D1, 1330-D1, 1340-D1) und ein negativer Anschluss der zweiten Diode (1310-D2, 1320-D2, 1330-D2, 1340-D2) mit der entsprechenden leitfähigen Platte (1210, 1220, 1230, 1240) verbunden sind;
ein negativer Anschluss der ersten Diode (1310-D1, 1320-D1, 1330-D1, 1340-D1) und ein positiver Anschluss der zweiten Diode (1310-D2, 1320-D2, 1330-D2, 1340-D2) mit dem Widerstand (1310-R, 1320-R, 1330-R, 1340-R) verbunden sind; und
der Widerstand (1310-R, 1320-R, 1330-R, 1340-R) mit dem gemeinsamen elektrischen Schaltungspunkt (800) verbunden ist.

7. Verfahren nach Anspruch 6, wobei:
wenn der zweite Strom aus dem ersten Strom abgeleitet ist,
der erste Strom von der ersten leitfähigen Platte nach außen fließt, und
der zweite Strom zu der zweiten leitfähigen Platte fließt; oder
wenn der erste Strom aus dem zweiten Strom abgeleitet ist,
der zweite Strom von der zweiten leitfähigen Platte nach außen fließt, und
der erste Strom zu der ersten leitfähigen Platte fließt.

8. Verfahren nach Anspruch 6 oder 7, ferner aufweisend:
Erfassen, dass eine dritte aus der Mehrzahl von leitfähigen Platten (1210, 1220, 1230, 1240) basierend auf einem dritten Strom von dem ersten Stromladeanschluss berührt wird; und
elektrisches Verbinden der dritten leitfähigen Platte mit dem ersten Stromversorgungsanschluss;
wobei das Bereitstellen von Ladeleistung für das Paar von Stromladeanschlüssen aufweist:
Bereitstellen von Ladeleistung für das Paar von Stromladeanschlüssen von dem Paar von Stromversorgungsanschlüssen (1510, 1520) über die erste, zweite und dritte leitfähige Platte.

9. Verfahren nach Anspruch 8,
wobei der dritte Strom von der dritten leitfähigen Platte nach außen fließt und der zweite Strom aus dem ersten und dem dritten Strom abgeleitet ist; oder
wobei der dritte Strom zu der dritten leitfähigen Platte fließt und der zweite und der dritte Strom aus dem ersten Strom abgeleitet sind.

10. Verfahren nach einem der Ansprüche 6 bis 9, ferner aufweisend:
Erzeugen eines ersten Detektionssignals basierend auf dem ersten Strom; und
Erzeugen eines zweiten Detektionssignals basierend auf dem zweiten Strom;
wobei:
das elektrische Verbinden der ersten leitfähigen Platte mit dem ersten Anschluss des Paars von Stromversorgungsanschlüssen (1510, 1520) das Auswählen des ersten Stromversorgungsanschlusses basierend auf dem ersten Detektionssignal aufweist, und
das elektrische Verbinden der zweiten leitfähigen Platte mit dem zweiten Anschluss des Paars von Stromversorgungsanschlüssen (1510, 1520) das Auswählen des zweiten Stromversorgungsanschlusses basierend auf dem zweiten Detektionssignal aufweist;
optional wobei:
das Erzeugen des ersten Detektionssignals aufweist:
Emittieren von erstem Licht basierend auf dem ersten Strom, und
Empfangen des ersten Lichts, um das erste Detektionssignal zu erzeugen; und
das Erzeugen des zweiten Detektionssignals aufweist:
Emittieren von zweitem Licht basierend auf dem zweiten Strom, und
Empfangen des zweiten Lichts, um das zweite Detektionssignal zu erzeugen.

11. Verfahren nach einem der Ansprüche 6 bis 10, wobei das Bereitstellen von Ladeleistung für das Paar von Stromladeanschlüssen ferner das Bereitstellen von Ladeleistung für das Paar von Stromladeanschlüssen über einen dritten Strom aufweist, wobei sich der dritte Strom von dem ersten und dem zweiten Strom unterscheidet.

## Revendications

1. Appareil destiné à fournir une puissance de charge à une paire de bornes de charge d'alimentation externes qui sont reliées à un dispositif de stockage d'énergie d'un dispositif externe, la paire de bornes de charge d'alimentation externes étant espacées d'une distance prédéterminée, l'appareil comprenant :
un ensemble de plaques conductrices (1200) comprenant une pluralité de plaques conductrices (1210, 1220, 1230, 1240), chacune des plaques conductrices (1210, 1220, 1230, 1240) ayant une surface, la surface ayant une longueur de surface maximale inférieure à la distance prédéterminée, la longueur de surface maximale étant supérieure ou égale à une longueur entre deux points quelconques de la surface de la plaque conductrice (1210, 1220, 1230, 1240) ;
une pluralité de circuits de détection (1300) reliés respectivement à des plaques conductrices correspondantes parmi la pluralité de plaques conductrices (1210, 1220, 1230, 1240), chacun des circuits de détection (1300) étant configuré pour réagir à une tension sur l'une des bornes de charge d'alimentation externes afin de fournir un signal de détection lorsque la plaque conductrice correspondante entre en contact avec ladite borne de charge d'alimentation externe ; et
une pluralité de circuits de sélection (1400) reliés respectivement à des plaques conductrices correspondantes parmi la pluralité de plaques conductrices (1210, 1220, 1230, 1240) et comprenant une paire de bornes d'alimentation (1510, 1520) destinées à recevoir une tension d'alimentation, chacun des circuits de sélection (1400) étant en outre relié de manière à recevoir le signal de détection provenant d'un circuit de détection correspondant parmi les circuits de détection (1300), et étant configuré pour connecter électriquement la plaque conductrice correspondante à l'une des bornes d'alimentation (1510, 1520) en réponse à la réception du signal de détection,
dans lequel la pluralité de circuits de détection (1300) sont reliés à un point de circuit électriquement commun (800) ;
dans lequel chacun des circuits de détection (1310, 1320, 1330, 1340) comprend des premières diodes (1310-D1, 1320-D1, 1330-D1, 1340-D1) et des secondes diodes (1310-D2, 1320-D2, 1330-D2, 1340-D2) reliées en parallèle et une résistance (1310-R, 1320-R, 1330-R, 1340-R), dans lequel :
une borne positive de la première diode (1310-D1, 1320-D1, 1330-D1, 1340-D1) et une borne négative de la seconde diode (1310-D2, 1320-D2, 1330-D2, 1340-D2) sont reliées à la plaque conductrice correspondante (1210, 1220, 1230, 1240) ;
une borne négative de la première diode (1310-D1, 1320-D1, 1330-D1, 1340-D1) et une borne positive de la seconde diode (1310-D2, 1320-D2, 1330-D2, 1340-D2) sont reliées à la résistance (1310-R, 1320-R, 1330-R, 1340-R) ; et
la résistance (1310-R, 1320-R, 1330-R, 1340-R) est reliée au point de circuit électriquement commun (800).

2. Appareil selon la revendication 1, dans lequel :
la pluralité de plaques conductrices (1210, 1220, 1230, 1240) sont disposées de manière à être contiguës, de sorte qu'une surface supérieure de l'ensemble de plaques conductrices (1200) est sensiblement plane ;
chacune des plaques conductrices (1210, 1220, 1230, 1240) présente des dimensions de longueur et de largeur sensiblement identiques aux dimensions de longueur et de largeur des autres plaques conductrices (1210, 1220, 1230, 1240) ; et
chacune des dimensions de longueur et de largeur de chacune des plaques conductrices (1210, 1220, 1230, 1240) est inférieure à la distance prédéterminée.

3. Appareil selon la revendication 1 ou 2, dans lequel chacun des circuits de sélection (1400) comprend :
un premier circuit de commutation (1410-1) relié entre la plaque conductrice correspondante (1210) et une première des bornes d'alimentation (1510, 1520) ;
un premier circuit de commande (1410-DR1) relié au premier circuit de commutation (1410-1) ;
un second circuit de commutation (1410-2) relié entre la plaque conductrice correspondante (1210) et une seconde des bornes d'alimentation (1510, 1520) ; et
un second circuit de commande (1410-DR2) relié au second circuit de commutation (1410-DR2).

4. Appareil selon la revendication 3,
dans lequel :
le premier circuit de commutation (1410-1) comprend un premier relais de commutation (1410-SW1),
le premier circuit de commande (1410-DR1) est relié au premier relais de commutation (1410-SW1) afin de fournir un premier signal de commutation pour activer le premier relais de commutation (1410-SW1) lorsqu'un premier courant circule à travers la première diode (1310-D1),
le second circuit de commutation (1410-2) comprend un second relais de commutation (1410-SW2), et
le second circuit de commande (1410-DR2) est relié au second relais de commutation (1410-SW2) afin de fournir un second signal de commutation pour activer le second relais de commutation lorsqu'un second courant circule à travers la seconde diode (1310-D2) ; ou
dans lequel :
le signal de détection comprend un premier et un second signal de détection,
le premier circuit de commutation (1410-1) comprend un premier relais de commutation (1410-SW1),
le premier circuit de commande (1410-DR1) est relié au premier relais de commutation (1410-SW1) afin de fournir un premier signal de commutation pour activer le premier relais de commutation (1410-SW1) en réponse à la réception du premier signal de détection,
le second circuit de commutation (1410-2) comprend un second relais de commutation (1410-SW2), et
le second circuit de commande (1410-DR2) est relié au second relais de commutation (1410-SW2) afin de fournir un second signal de commutation pour activer le second relais de commutation (1410-SW2) en réponse à la réception du second signal de détection.

5. Appareil selon l'une quelconque des revendications 1 à 4, dans lequel les circuits de détection (1300) sont configurés pour commander sans fil les circuits de sélection (1400) afin de connecter électriquement deux des plaques conductrices (1210, 1220, 1230, 1240) à la paire de bornes d'alimentation (1510, 1520).

6. Procédé de fourniture d'une puissance de charge, au moyen de l'appareil selon l'une quelconque des revendications 1 à 5, à une paire de bornes de charge d'alimentation reliées à un dispositif de stockage d'énergie, le procédé comprenant :
la détection, par un premier circuit de détection de la pluralité de circuits de détection (1300), du fait qu'une première plaque parmi la pluralité de plaques conductrices (1210, 1220, 1230, 1240) est en contact avec une première borne de la paire de bornes de charge d'alimentation, sur la base d'un premier courant ;
la détection, par un second circuit de détection de la pluralité de circuits de détection (1300), du fait qu'une seconde plaque parmi la pluralité de plaques conductrices (1210, 1220, 1230, 1240) est en contact avec une seconde borne de la paire de bornes de charge d'alimentation, sur la base d'un second courant, dans lequel le second courant provient du premier courant, ou le premier courant provient du second courant ;
la connexion électrique de la première plaque conductrice à une première borne de la paire de bornes d'alimentation (1510, 1520) par un premier circuit de sélection de la pluralité de circuits de sélection (1400) ;
la connexion électrique de la seconde plaque conductrice à une seconde borne de la paire de bornes d'alimentation (1510, 1520) par un second circuit de sélection de la pluralité de circuits de sélection (1400) ; et la fourniture d'une puissance de charge à la paire de bornes de charge d'alimentation depuis la paire de bornes d'alimentation (1510, 1520) à travers les premier et second circuits de sélection, par l'intermédiaire des première et seconde plaques conductrices ;
dans lequel la pluralité de circuits de détection (1300) sont reliés à un point de circuit électriquement commun (800) ;
dans lequel chacun des circuits de détection (1310, 1320, 1330, 1340) comprend des premières diodes (1310-D1, 1320-D1, 1330-D1, 1340-D1) et des secondes diodes (1310-D2, 1320-D2, 1330-D2, 1340-D2) reliées en parallèle et une résistance (1310-R, 1320-R, 1330-R, 1340-R), dans lequel :
une borne positive de la première diode (1310-D1, 1320-D1, 1330-D1, 1340-D1) et une borne négative de la seconde diode (1310-D2, 1320-D2, 1330-D2, 1340-D2) sont reliées à la plaque conductrice correspondante (1210, 1220, 1230, 1240) ;
une borne négative de la première diode (1310-D1, 1320-D1, 1330-D1, 1340-D1) et une borne positive de la seconde diode (1310-D2, 1320-D2, 1330-D2, 1340-D2) sont reliées à la résistance (1310-R, 1320-R, 1330-R, 1340-R) ; et
la résistance (1310-R, 1320-R, 1330-R, 1340-R) est reliée au point de circuit électriquement commun (800).

7. Procédé selon la revendication 6, dans lequel :
lorsque le second courant provient du premier courant,
le premier courant circule vers l'extérieur depuis la première plaque conductrice, et
le second courant circule vers la seconde plaque conductrice ; ou
lorsque le premier courant provient du second courant,
le second courant circule vers l'extérieur depuis la seconde plaque conductrice, et
le premier courant circule vers la première plaque conductrice.

8. Procédé selon la revendication 6 ou 7, comprenant en outre :
la détection du fait qu'une troisième plaque parmi la pluralité de plaques conductrices (1210, 1220, 1230, 1240) est en contact avec la première borne de charge d'alimentation, sur la base d'un troisième courant ; et
la connexion électrique de la troisième plaque conductrice à la première borne d'alimentation ;
dans lequel la fourniture d'une puissance de charge à la paire de bornes de charge d'alimentation comprend :
la fourniture d'une puissance de charge à la paire de bornes de charge d'alimentation depuis la paire de bornes d'alimentation (1510, 1520) par l'intermédiaire des première, seconde et troisième plaques conductrices.

9. Procédé selon la revendication 8,
dans lequel le troisième courant circule vers l'extérieur depuis la troisième plaque conductrice, et le second courant provient des premier et troisième courants ; ou
dans lequel le troisième courant circule vers la troisième plaque conductrice, et les deuxième et troisième courants proviennent du premier courant.

10. Procédé selon l'une quelconque des revendications 6 à 9, comprenant en outre :
la génération d'un premier signal de détection sur la base du premier courant ; et
la génération d'un second signal de détection sur la base du second courant ;
dans lequel :
la connexion électrique de la première plaque conductrice à la première borne de la paire de bornes d'alimentation (1510, 1520) comprend la sélection de la première borne d'alimentation sur la base du premier signal de détection, et
la connexion électrique de la seconde plaque conductrice à la seconde borne de la paire de bornes d'alimentation (1510, 1520) comprend la sélection de la seconde borne d'alimentation sur la base du second signal de détection ;
optionnellement, dans lequel :
la génération du premier signal de détection comprend :
l'émission d'une première lumière sur la base du premier courant, et
la réception de la première lumière pour générer le premier signal de détection ; et
la génération du second signal de détection comprend :
l'émission d'une seconde lumière sur la base du second courant, et
la réception de la seconde lumière pour générer le second signal de détection.

11. Procédé selon l'une quelconque des revendications 6 à 10, dans lequel la fourniture d'une puissance de charge à la paire de bornes de charge d'alimentation comprend en outre la fourniture d'une puissance de charge à la paire de bornes de charge d'alimentation au moyen d'un troisième courant, dans lequel le troisième courant est différent des premier et second courants.
